# EUROPEAN PATENT APPLICATION

(11) **EP 4 261 926 A1**
(43) Date of publication of application: **18.10.2023**
(21) Application number: 22759248.2
(22) Date of filing: 28.01.2022
(51) Int. Cl.: H01M 4/13, H01M 4/131, H01M 4/36, H01M 4/48, H01M 4/505, H01M 4/525, H01M 10/052, H01M 10/0568, H01M 10/0569, H01M 10/058, H01M 50/109, H01M 50/184, H01M 50/437, H01M 50/44

(54) **NON-AQUEOUS ELECTROLYTE SECONDARY BATTERY**

(30) Priority: 26.02.2021 JP 2021030396
(71) Applicant: Seiko Instruments Inc., Chiba-shi, Chiba 261-8507 (JP)
(72) Inventor: MIURA Ken, Chiba-shi, Chiba 261-8507 (JP)
(74) Representative: Lewis Silkin LLP
(86) International application number: PCT/JP2022/003367
(87) International publication number: WO 2022/181207

(57) **Abstract**

A non-aqueous electrolyte secondary battery of the present invention includes a positive electrode (10), a negative electrode (20), a separator (30), an electrolyte solution (50), and a storage container (2) in which the positive electrode (10), the negative electrode (20), the separator (30), and the electrolyte solution (50) are arranged in an internal storage space, in which at least one of the positive electrode (10) or the negative electrode (20) is in the form of a pellet containing an active material, a conductive aid, and a binder, the separator (30) is formed of a glass fiber non-woven fabric, and the electrolyte solution (50) contains, as the organic solvent, a mixed solution consisting of propylene carbonate, ethylene carbonate, and dimethoxyethane at a volume ratio in a range of {PC:EC:DME} = {0.5 to 1.5:0.5 to 1.5:1 to 3}, and contains, as the supporting salt, 2 to 7 (mol/L) of lithium bis(fluorosulfonyl)imide.

## Description

### [Technical Field]

The present invention relates to a non-aqueous electrolyte secondary battery.

Priority is claimed on Japanese Patent Application No. 2021-030396, filed February 26, 2021, the content of which is incorporated herein by reference.

### [Background Art]

A non-aqueous electrolyte secondary battery includes, in a sealed storage container, a pair of polarizable electrodes consisting of a positive electrode and a negative electrode, a separator interposed between the positive electrode and the negative electrode, and an electrolyte solution impregnated in the positive electrode, the negative electrode, and the separator, which contains a supporting salt and a non-aqueous solvent such as an organic solvent. Such a non-aqueous electrolyte secondary battery has high energy density and is light in weight, so that the non-aqueous electrolyte secondary battery can be used as a power supply unit of electronic device, a power storage unit which absorbs fluctuations in the amount of power generated by a power generation device, and the like.

In addition, a non-aqueous electrolyte secondary battery containing a silicon oxide (SiOₓ) as a negative electrode active material in the negative electrode is particularly used as a small-sized non-aqueous electrolyte secondary battery such as a coin-type (button-type) battery because of its high discharge capacity. It is known that such a coin-type non-aqueous electrolyte secondary battery has high voltage, high energy density, excellent charge and discharge characteristics, long cycle life, and high reliability. Therefore, in the related art, the non-aqueous electrolyte battery has been used, for example, as a backup power supply for semiconductor memory, a backup power supply for clock functions, and the like in various small electronic devices such as mobile phone, PDA, portable game machine, and digital camera (for example, see Patent Document 1).

In addition, in the non-aqueous electrolyte secondary battery, an organic electrolyte solution using, for example, a cyclic carbonate ester, a chain-like carbonate ester, or a mixture thereof as a solvent is used as the electrolyte solution. In Patent Document 1, for the purpose of enabling operation over a wide temperature range, it is disclosed that an electrolyte solution containing ethylene carbonate (hereinafter, may be referred to as EC) and propylene carbonate (hereinafter, may be referred to as PC), which are cyclic carbonate solvents, and dimethoxyethane (hereinafter, may be referred to as DME), which is a chain-like ether solvent, at a predetermined ratio, and further containing, as a supporting salt, 0.6 to 1.4 mol/L of an imide salt (LiFSI or LiTFSI) is used.

The non-aqueous electrolyte secondary battery according to Patent Document 1 relates to a coin-type non-aqueous electrolyte secondary battery with a discharge current of approximately 5 to 25 µA, which is used for a memory backup of mounted equipment, and in particular, ensures a sufficient discharge capacity over a wide temperature range, including in low-temperature environments. More specifically, in Patent Document 1, EC and PC are used as the organic solvent for the purpose of maintaining the discharge capacity in a high-temperature environment, and DME is used as the organic solvent for the purpose of improving low-temperature characteristics.

In addition, in a case where the concentration of the supporting salt is too high, usually, it is difficult to obtain a sufficient discharge capacity, so that, in Patent Document 1, the concentration of the supporting salt is set to 0.6 to 1.4 mol/L.

### [Citation List]

### [Patent Document]

### [Patent Document 1]

PCT International Publication No. WO 2016/143543

### [Summary of Invention]

### [Technical Problem]

In recent years, with the miniaturization of various electronic devices, there has been a demand for small-sized non-aqueous electrolyte secondary batteries such as coin-type batteries to be used not only for memory backup but also for main power sources. In such applications, it is required for the non-aqueous electrolyte secondary battery to have high output characteristics capable of supplying a large current in addition to being small and having high capacity. However, in the case of the coin-type non-aqueous electrolyte secondary battery with a small size, as disclosed in Patent Document 1, the formulation of the electrolyte solution provided in non-aqueous electrolyte secondary batteries in the related art has a problem in that it is difficult to obtain high output characteristics.

The present invention has been made in view of the above-described problem, and an object of the present invention is to provide a non-aqueous electrolyte secondary battery which can supply a large current over a wide temperature range, can maintain a sufficient discharge capacity even at a mA-level discharge, and is small in size and provides high output and high capacity.

### [Solution to Problem]

The present inventors intensively studied to solve the above-described problem, and have repeatedly conducted experiments to supply a large current over a wide temperature range and maintain a sufficient discharge capacity in a small-sized non-aqueous electrolyte secondary battery such as a coin-type battery. As a result, by adjusting and optimizing a formulation of the organic solvent and the supporting salt used in the electrolyte solution and by optimizing the overall battery structure, it was found that even a small-sized non-aqueous electrolyte secondary battery can achieve both high output and high capacity.

That is, the present inventors found that, first, by using, as the organic solvent contained in an electrolyte, a mixed solvent of a cyclic carbonate solvent having a structure represented by (Chemical Formula 1) and a chain-like ether solvent having a structure represented by (Chemical Formula 2) and by adjusting a mixing ratio of each solvent, low-temperature characteristics can be improved without impairing capacity characteristics at room temperature and capacity retention rate at high temperature.

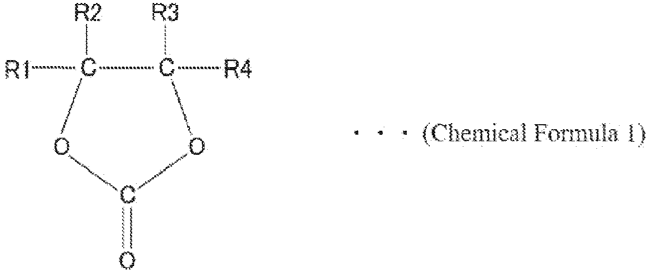

Here, in (Chemical Formula 1), R1, R2, R3, and R4 represent any one of hydrogen, fluorine, chlorine, an alkyl group having 1 to 3 carbon atoms, or a fluorinated alkyl group. In addition, R1, R2, R3, and R4 in (Chemical Formula 1) may be the same or different from each other.

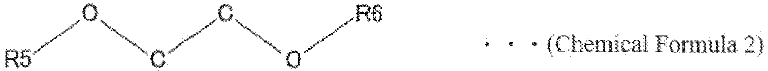

Here, in (Chemical Formula 2), R7 and R8 represent any one of hydrogen, fluorine, chlorine, an alkyl group having 1 to 3 carbon atoms, or a fluorinated alkyl group. In addition, R7 and R8 may be the same or different from each other.

In addition, the present inventors repeated further experiments and studies on the cyclic carbonate solvent (Chemical Formula 1) and the chain-like ether solvent (Chemical Formula 2) constituting the above-described mixed solvent.

As a result, it was found that, first, by using, as the cyclic carbonate solvent represented by (Chemical Formula 1), ethylene carbonate (EC) and propylene carbonate (PC), it is possible to maintain a favorable capacity retention rate, particularly at high temperature.

In addition, it was found that, by using, as the chain-like ether solvent represented by (Chemical Formula 2), dimethoxyethane (DME), the low-temperature characteristics can be particularly improved while securing the capacity at room temperature.

Furthermore, it was found that, by adjusting the above-described mixing ratio of EC, PC, and DME, in particular, the effect of maintaining the discharge capacity in low-temperature environments is significantly obtained.

The present inventors found that, by setting the solvents used in the electrolyte solution to the above-described formulation and by adjusting and optimizing the formulation and content of the supporting salt, even a small-sized non-aqueous electrolyte secondary battery such as a coin-type battery can supply a large current over a wide temperature range, including in low-temperature environments, and achieve high output characteristics.

The present inventors found that, by combining the configuration in which the formulation of the above-described electrolyte solution is optimized and the configuration in which the arrangement structure of each battery element inside the storage container is optimized, the above-described high output characteristics and high capacity characteristics can be obtained more remarkably, and completed the present invention.

That is, a non-aqueous electrolyte secondary battery according to an aspect of the present invention includes a positive electrode containing a positive electrode active material, a negative electrode containing a negative electrode active material, a separator disposed between the positive electrode and the negative electrode, an electrolyte solution containing an organic solvent and a supporting salt, and a storage container in which the positive electrode, the negative electrode, the separator, and the electrolyte solution are arranged in an internal storage space, in which at least one of the positive electrode or the negative electrode is in the form of a pellet containing an active material, a conductive aid, and a binder, the separator is formed of a glass fiber non-woven fabric, and the electrolyte solution contains, as the organic solvent, a mixed solution consisting of propylene carbonate (PC), ethylene carbonate (EC), and dimethoxyethane (DME) at a volume ratio in a range of {PC:EC:DME} = {0.5 to 1.5:0.5 to 1.5:1 to 3}, and contains, as the supporting salt, 2 to 7 (mol/L) of lithium bis(fluorosulfonyl)imide (LiFSI).

According to the present invention, first, by setting the organic solvent used in the electrolyte solution to the above-described formulation, it is possible to prevent the viscosity of the electrolyte solution from increasing in a low-temperature environment from room temperature to -30°C to -40°C and to suppress hindrance of transfer of electric charges, so that discharge characteristics in low-temperature environments can be improved and sufficient discharge capacity over a wide temperature range can be maintained.

Specifically, first, by using, as the cyclic carbonate solvent, PC and EC, which have a high dielectric constant and high solubility of the supporting salt, it is possible to obtain a large discharge capacity. In addition, since PC and EC have high boiling points, even in a case where the electrolyte solution is used or stored in high-temperature environments, the electrolyte solution is difficult to volatilize.

In addition, by using, in combination with EC, PC having a lower melting point than EC as the cyclic carbonate solvent, it is possible to improve the low-temperature characteristics.

In addition, by using DME having a low melting point as the chain-like ether solvent, the low-temperature characteristics are improved. In addition, since DME has a low viscosity, electrical conductivity of the electrolyte solution is improved. Furthermore, DME solvates Li ions, thereby increasing the discharge capacity of the non-aqueous electrolyte secondary battery.

Furthermore, by using, as the supporting salt used in the electrolyte solution, LiFSI having excellent conductivity at the molar ratio within the above-described range, a large current can be obtained even with a small-sized non-aqueous electrolyte secondary battery. In addition, by containing LiFSI in the electrolyte solution at the molar ratio within the above-described range, voltage drop at an initial stage of discharge can be suppressed within a certain range, so that sufficient discharge capacity can be maintained.

In addition, in the above-described configuration of the non-aqueous electrolyte secondary battery according to the aspect of the present invention, the electrolyte solution contains 4 to 7 (mol/L) of the lithium bis(fluorosulfonyl)imide (LiFSI) as the supporting salt.

According to the present invention, by using, as the supporting salt used in the electrolyte solution, LiFSI having excellent conductivity at the molar ratio within the above-described range, electrical characteristics, more specifically, overdischarge characteristics of the non-aqueous electrolyte secondary battery after being stored under the conditions of high temperature, high humidity, and overdischarge are improved. As a result, even in a case where the overdischarge occurs, it is possible to more effectively prevent deterioration of the non-aqueous electrolyte secondary battery. In addition, by containing LiFSI in the electrolyte solution within the above-described range, internal resistance of the non-aqueous electrolyte secondary battery can be effectively reduced.

In addition, in the above-described configuration of the non-aqueous electrolyte secondary battery according to the aspect of the present invention, the storage container includes a bottomed cylindrical positive electrode can and a negative electrode can which is fixed to an opening portion of the positive electrode can with an interposed gasket to form a storage space with the positive electrode can, and the storage container is a coin-type container in which the storage space is sealed by crimping the opening portion of the positive electrode can toward a negative electrode can side.

According to the present invention, by arranging each battery element in the storage space of the storage container in which the positive electrode can and the negative electrode can are sealed with an optimal structure, the storage container has a structure with excellent electrical insulation and sealing properties, and it is possible to prevent volatilization of the electrolyte solution and penetration of moisture contained in the air into the battery. As a result, even with a small-sized coin-type non-aqueous electrolyte secondary battery, the high output characteristics and high capacity characteristics described above can be obtained remarkably.

In addition, in the above-described configuration of the non-aqueous electrolyte secondary battery according to the aspect of the present invention, the storage container has a structure in which the gasket is interposed between an inner bottom portion and an inner side portion of the positive electrode can and the negative electrode can for insulating and sealing.

According to the present invention, by adopting an insulating sealing structure with an optimally interposed gasket between the positive electrode can and the negative electrode can, the electrical insulation and sealing properties are further enhanced, so that, as described above, even with a small-sized coin-type non-aqueous electrolyte secondary battery, excellent high output characteristics and high capacity characteristics can be obtained remarkably.

In addition, in the above-described configuration of the non-aqueous electrolyte secondary battery according to the aspect of the present invention, that is, in the configuration which adopts the insulating sealing structure in which the gasket is interposed between the inner bottom portion and inner side portion of the positive electrode can and the negative electrode can, the electrolyte solution contains 3 to 4 (mol/L) of the lithium bis(fluorosulfonyl)imide (LiFS1) as the supporting salt.

According to the present invention, in the non-aqueous electrolyte secondary battery which adopts the insulating sealing structure in which the gasket is interposed between the inner bottom portion and inner side portion of the positive electrode can and the negative electrode can, by using, as the supporting salt used in the electrolyte solution, LiFSI having excellent conductivity at the molar ratio within the above-described range, a large current can be obtained and a sufficient discharge capacity can be maintained. As a result, as described above, even with a small-sized coin-type non-aqueous electrolyte secondary battery, excellent high output characteristics and high capacity characteristics can be obtained more remarkably.

In addition, in the above-described configuration of the non-aqueous electrolyte secondary battery according to the aspect of the present invention, the storage container has a structure in which the positive electrode is disposed to cover an entire inner bottom portion of the positive electrode can and the gasket is interposed between an inner side portion of the positive electrode can and the positive electrode, and the negative electrode can for insulating and sealing.

According to the present invention, by adopting an insulating sealing structure in which the positive electrode is disposed to cover the entire inner bottom portion of the positive electrode can and the gasket is interposed between the inner side portion of the positive electrode can and the positive electrode, and the negative electrode can, as described above, the electrical insulation and sealing properties are further enhanced. As a result, as described above, even with a small-sized coin-type non-aqueous electrolyte secondary battery, excellent high output characteristics and high capacity characteristics can be obtained remarkably.

In addition, in the above-described configuration of the non-aqueous electrolyte secondary battery according to the aspect of the present invention, the electrolyte solution contains 2 to 3 (mol/L) of the lithium bis(fluorosulfonyl)imide (LiFSI) as the supporting salt.

According to the present invention, in the non-aqueous electrolyte secondary battery which adopts the insulating sealing structure in which the positive electrode is disposed to cover the entire inner bottom portion of the positive electrode can and the gasket is interposed between the inner side portion of the positive electrode can and the positive electrode, and the negative electrode can, by using, as the supporting salt used in the electrolyte solution, LiFSI having excellent conductivity at the molar ratio within the above-described range, a large current can be obtained and a sufficient discharge capacity can be maintained. As a result, as described above, even with a small-sized coin-type non-aqueous electrolyte secondary battery, excellent high output characteristics and high capacity characteristics can be obtained more remarkably.

In addition, in the above-described configuration of the non-aqueous electrolyte secondary battery according to the aspect of the present invention, the positive electrode contains, as the positive electrode active material, at least a lithium manganese oxide composed of Li₁₊ₓCo_{y}Mn_{2-x-y}O₄ (0 ≤ x ≤ 0.33 and 0 < y ≤ 0.2).

According to the present invention, by containing, as a lithium manganese oxide used for the positive electrode active material, the compound having the above-described formulation in the positive electrode, it is possible to obtain the effect of further stabilizing the high output characteristics and the high capacity characteristics.

In addition, in the above-described configuration of the non-aqueous electrolyte secondary battery according to the aspect of the present invention, the negative electrode contains, as the negative electrode active material, SiOx (0 < X < 2) having at least a part of a surface coated with a carbon.

According to the present invention, by using, as the negative electrode active material in the negative electrode, SiOx (0 < X < 2) having a surface coated with a carbon, conductivity of the negative electrode is improved and an increase in internal resistance in low-temperature environments is suppressed, so that a voltage drop at the initial stage of discharge is suppressed, the high capacity characteristics are more stabilized, a large current can be stably supplied, and the high output characteristics are also more stabilized.

### [Advantageous Effects of Invention]

According to the non-aqueous electrolyte secondary battery of the present invention, first, by using the optimum ratio of PC and EC in the organic solvent as the electrolyte solution, it is possible to perform operation in a wide temperature range, and by using the optimum ratio of DME, the low-temperature characteristics are improved, so that the electrical conductivity of the electrolyte solution is improved. In addition, by containing LiFSI in the electrolyte solution as the supporting salt at the optimum range, both high output characteristics and high capacity characteristics are obtained.

Furthermore, by combining the electrolyte solution with an optimized formulation and the configuration in which the arrangement structure of each battery element inside is optimized, it is possible to provide a non-aqueous electrolyte secondary battery which is small in size, has excellent high output characteristics, and has excellent high capacity characteristics.

### [Brief Description of Drawings]

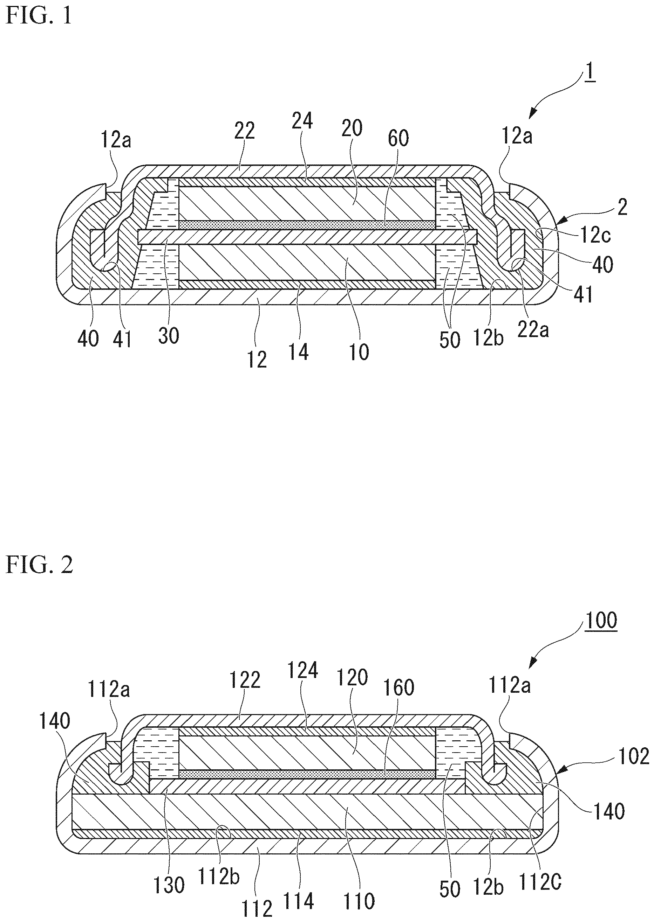

FIG. 1 is a cross-sectional view schematically showing a coin-type non-aqueous electrolyte secondary battery according to one embodiment of the present invention.
FIG. 2 is a cross-sectional view schematically showing a coin-type non-aqueous electrolyte secondary battery according to another embodiment of the present invention.

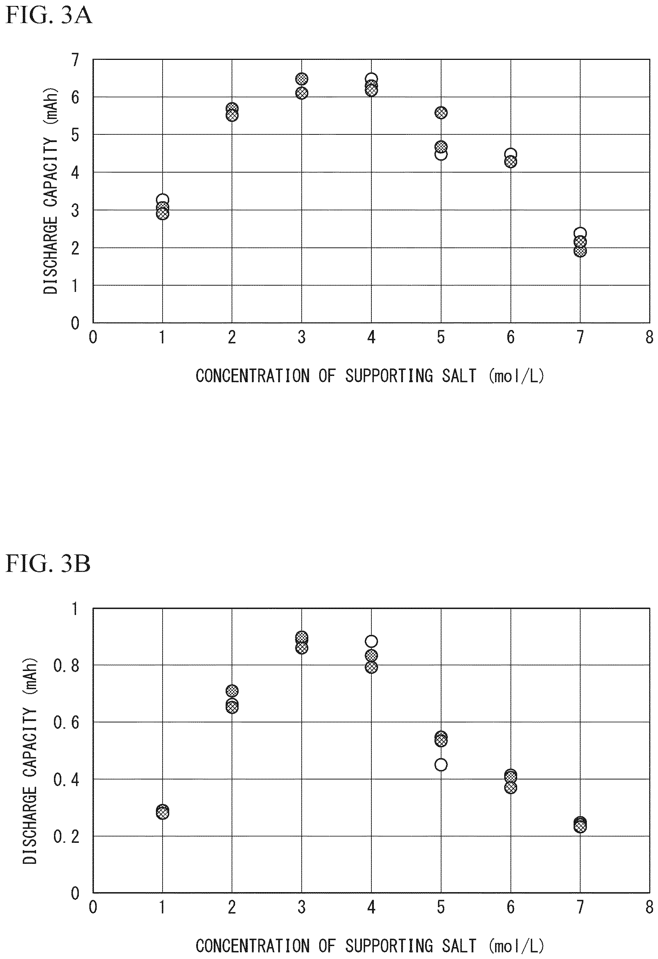

FIG. 3A is a diagram explaining an example of the non-aqueous electrolyte secondary battery according to the embodiment of the present invention, is a diagram explaining capacity characteristics of the non-aqueous electrolyte secondary battery, and is a graph showing a change in capacity in a case where a molar concentration of a supporting salt contained in an electrolyte solution is varied and discharge is performed at a final discharge voltage of 1.0 V and a discharge current of 1 mA.
FIG. 3B is a diagram explaining an example of the non-aqueous electrolyte secondary battery according to the embodiment of the present invention, is a diagram explaining capacity characteristics of the non-aqueous electrolyte secondary battery, and is a graph showing a change in capacity in a case where a molar concentration of a supporting salt contained in an electrolyte solution is varied and discharge is performed at a final discharge voltage of 1.0 V and a discharge current of 7 mA.

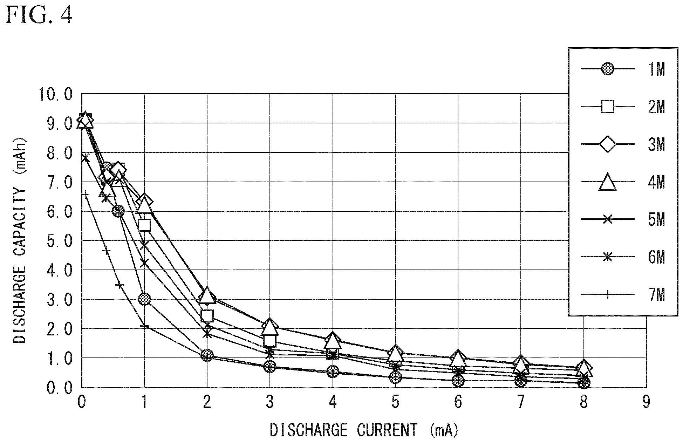

FIG. 4 is a diagram explaining an example of the non-aqueous electrolyte secondary battery according to the embodiment of the present invention, is a diagram explaining power characteristics and capacity characteristics of the non-aqueous electrolyte secondary battery, and is a graph showing a relationship between a discharge current and a capacity in a case where discharge is performed at a molar concentration of a supporting salt contained in an electrolyte solution of 1 to 7 mol/L, a discharge current of 1 to 8 mA, and a final discharge voltage of 1.0 V.

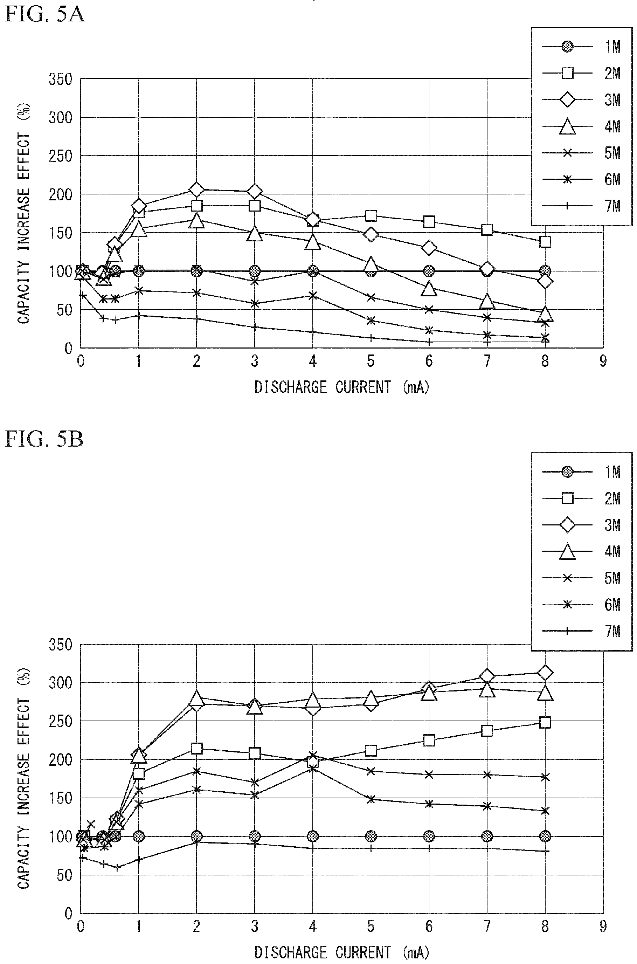

FIG. 5A is a diagram explaining an example of the non-aqueous electrolyte secondary battery according to the embodiment of the present invention, is a diagram explaining an effect of increasing a discharge capacity of the non-aqueous electrolyte secondary battery, and is a graph showing a relationship between a discharge current in a case where discharge is performed at a molar concentration of a supporting salt contained in an electrolyte solution of 1 to 7 mol/L and a final discharge voltage of 2.0 V, and a relative value in a case where a discharge capacity at a concentration of supporting salt of 1 M is set to 1.
FIG. 5B is a diagram explaining an example of the non-aqueous electrolyte secondary battery according to the embodiment of the present invention, is a diagram explaining an effect of increasing a discharge capacity of the non-aqueous electrolyte secondary battery, and is a graph showing a relationship between a discharge current in a case where discharge is performed at a molar concentration of a supporting salt contained in an electrolyte solution of 1 to 7 mol/L and a final discharge voltage of 1.0 V, and a relative value in a case where a discharge capacity at a concentration of supporting salt of 1 M is set to 1.

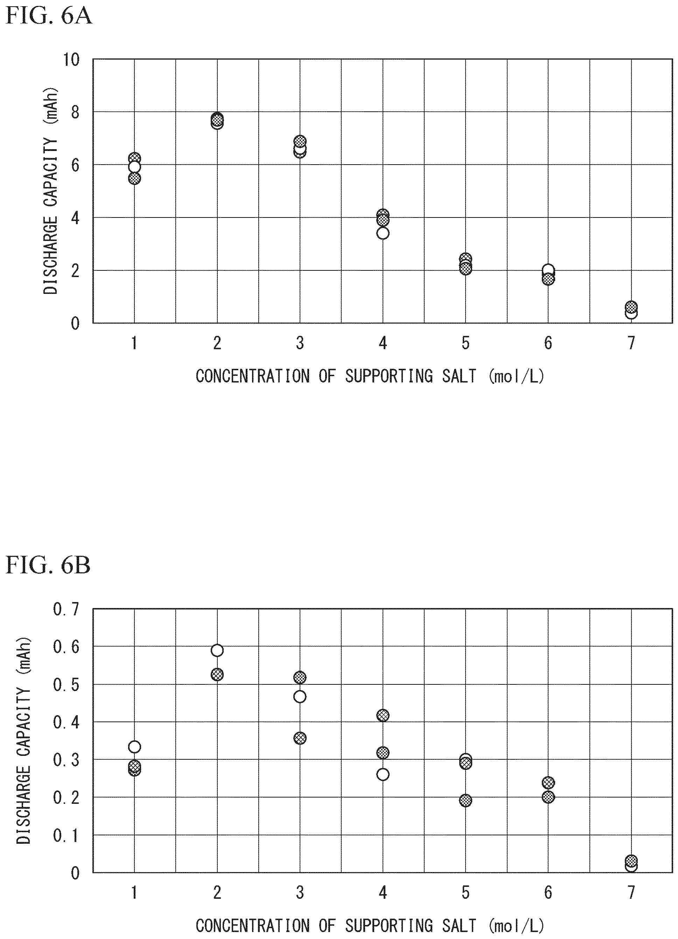

FIG. 6A is a diagram explaining an example of the non-aqueous electrolyte secondary battery according to the embodiment of the present invention, is a diagram explaining capacity characteristics of the non-aqueous electrolyte secondary battery, and is a graph showing a change in capacity in a case where a molar concentration of a supporting salt contained in an electrolyte solution is varied and discharge is performed at a final discharge voltage of 1.0 V and 1 mA.
FIG. 6B is a diagram explaining an example of the non-aqueous electrolyte secondary battery according to the embodiment of the present invention, is a diagram explaining capacity characteristics of the non-aqueous electrolyte secondary battery, and is a graph showing a change in capacity in a case where a molar concentration of a supporting salt contained in an electrolyte solution is varied and discharge is performed at a final discharge voltage of 1.0 V and 7 mA.

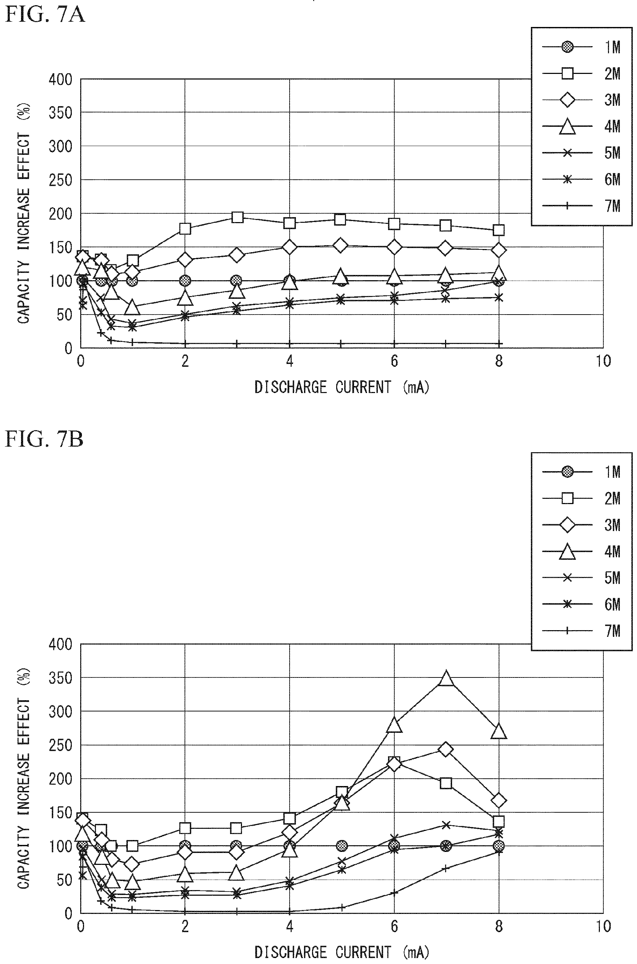

FIG. 7A is a diagram explaining an example of the non-aqueous electrolyte secondary battery according to the embodiment of the present invention, is a diagram explaining an effect of increasing a discharge capacity of the non-aqueous electrolyte secondary battery, and is a graph showing a relationship between a discharge current in a case where a molar concentration of a supporting salt contained in an electrolyte solution is set to 1 to 7 mol/L and a final discharge voltage is set to 1.0 V, and a relative value in a case where a discharge capacity at a concentration of supporting salt of 1 M is set to 1.
FIG. 7B is a diagram explaining an example of the non-aqueous electrolyte secondary battery according to the embodiment of the present invention, is a diagram explaining an effect of increasing a discharge capacity of the non-aqueous electrolyte secondary battery, and is a graph showing a relationship between a discharge current in a case where a molar concentration of a supporting salt contained in an electrolyte solution is set to 1 to 7 mol/L and a final discharge voltage is set to 2.0 V, and a relative value in a case where a discharge capacity at a concentration of supporting salt of 1 M is set to 1.

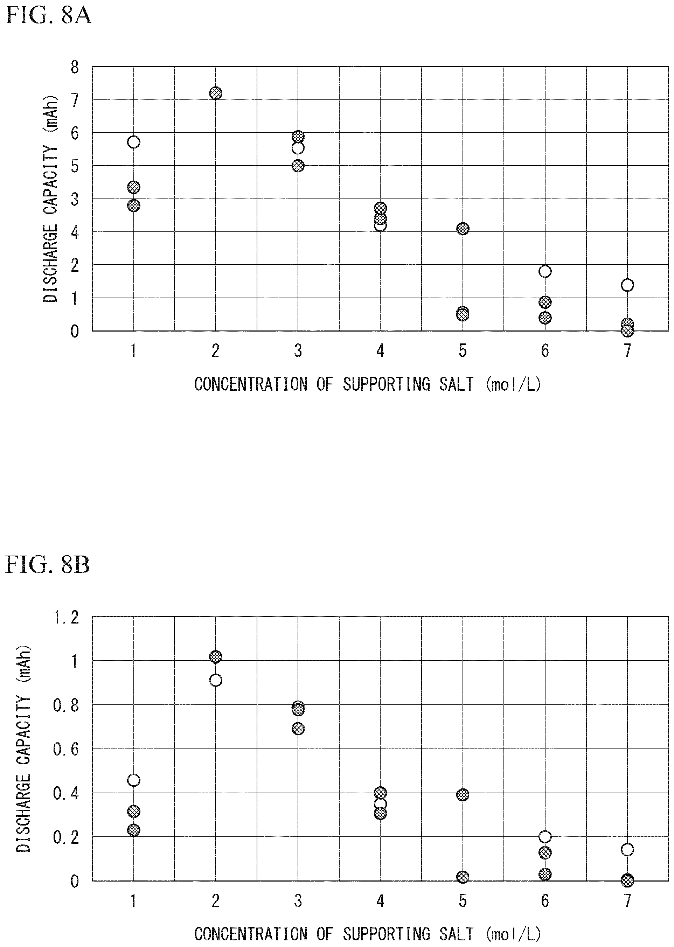

FIG. 8A is a diagram explaining an example of the non-aqueous electrolyte secondary battery according to the embodiment of the present invention, is a diagram explaining capacity characteristics of the non-aqueous electrolyte secondary battery, and is a graph showing a change in capacity in a case where a molar concentration of a supporting salt contained in an electrolyte solution is varied and discharge is performed at a final discharge voltage of 1.0 V and 1 mA.
FIG. 8B is a diagram explaining an example of the non-aqueous electrolyte secondary battery according to the embodiment of the present invention, is a diagram explaining capacity characteristics of the non-aqueous electrolyte secondary battery, and is a graph showing a change in capacity in a case where a molar concentration of a supporting salt contained in an electrolyte solution is varied and discharge is performed at a final discharge voltage of 1.0 V and 7 mA.

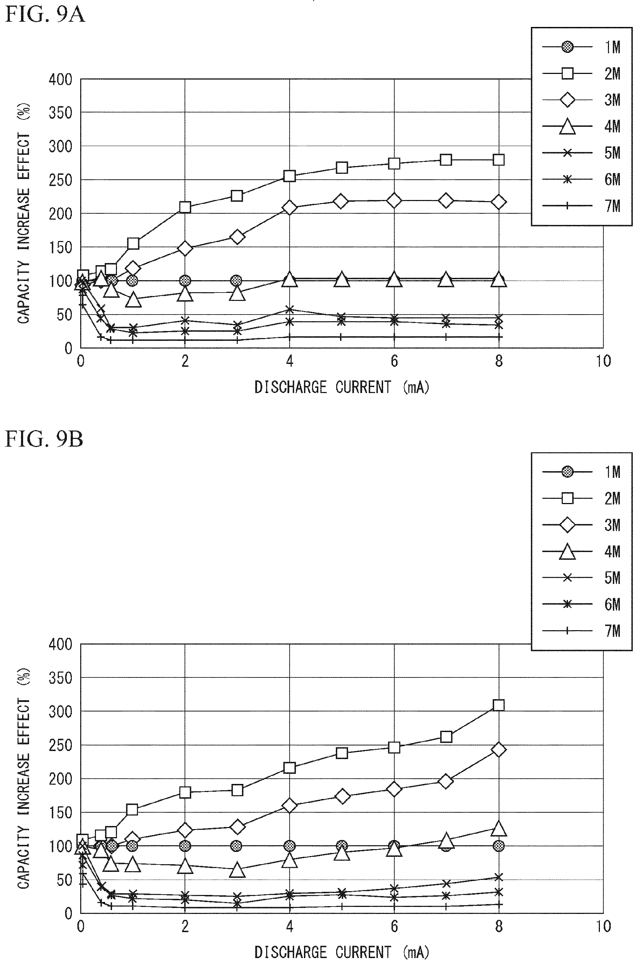

FIG. 9A is a diagram explaining an example of the non-aqueous electrolyte secondary battery according to the embodiment of the present invention, is a diagram explaining an effect of increasing a discharge capacity of the non-aqueous electrolyte secondary battery, and is a graph showing a relationship between a discharge current in a case where a molar concentration of a supporting salt contained in an electrolyte solution is set to 1 to 7 mol/L and a final discharge voltage is set to 1.0 V, and a relative value in a case where a discharge capacity at a concentration of supporting salt of 1 M is set to 1.
FIG. 9B is a diagram explaining an example of the non-aqueous electrolyte secondary battery according to the embodiment of the present invention, is a diagram explaining an effect of increasing a discharge capacity of the non-aqueous electrolyte secondary battery, and is a graph showing a relationship between a discharge current in a case where a molar concentration of a supporting salt contained in an electrolyte solution is set to 1 to 7 mol/L and a final discharge voltage is set to 2.0 V, and a relative value in a case where a discharge capacity at a concentration of supporting salt of 1 M is set to 1.

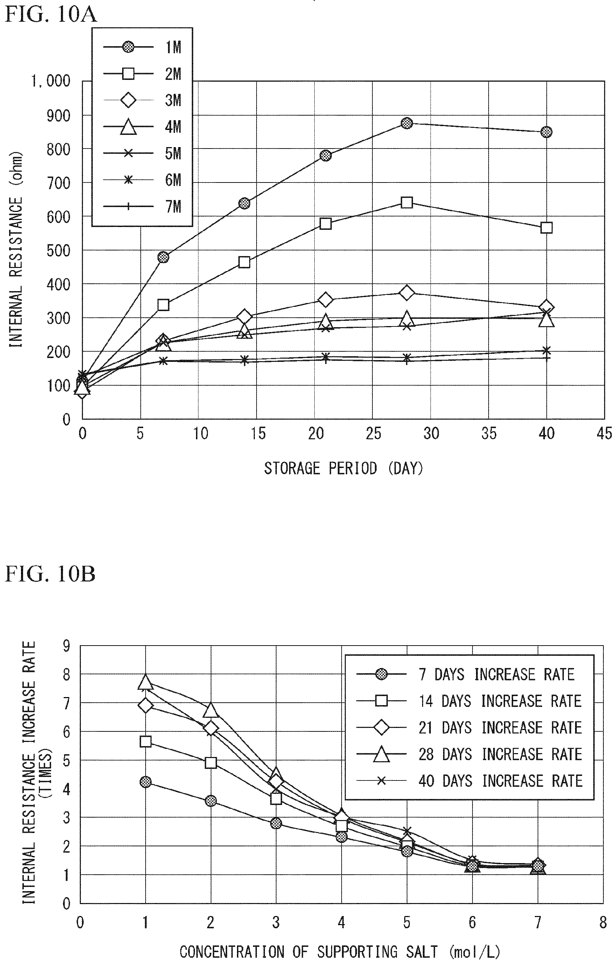

FIG. 10A is a diagram explaining an example of the non-aqueous electrolyte secondary battery according to the embodiment of the present invention, is a diagram explaining transition of an internal resistance of the non-aqueous electrolyte secondary battery in a high-temperature and high-humidity storage test, and is a graph showing a relationship between the number of days stored in a high-temperature and high-humidity environment and the transition of the internal resistance in a case where a molar concentration of a supporting salt contained in an electrolyte solution is set to 1 to 7 mol/L.
FIG. 10B is a diagram explaining an example of the non-aqueous electrolyte secondary battery according to the embodiment of the present invention, is a diagram explaining a rate of increase in internal resistance of the non-aqueous electrolyte secondary battery after the high-temperature and high-humidity storage test, and is a graph showing a relationship between the number of moles of the supporting salt and the rate of increase in internal resistance after storage for each number of days in a case where a molar concentration of a supporting salt contained in an electrolyte solution is set to 1 to 7 mol/L and the number of days stored in a high-temperature and high-humidity environment is set to 7 to 40 days.

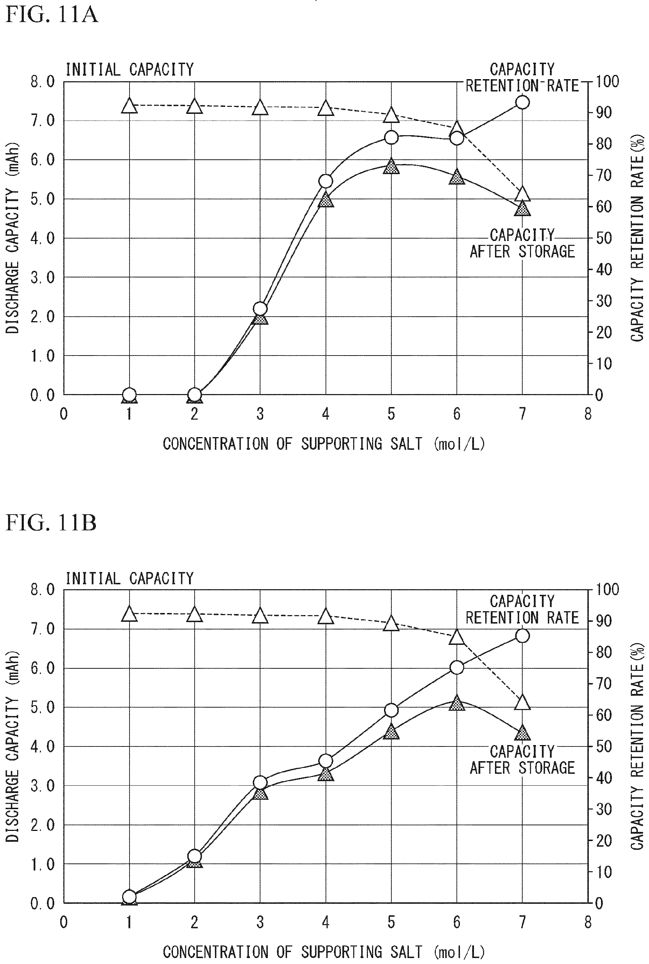

FIG. 11A is a diagram explaining an example of the non-aqueous electrolyte secondary battery according to the embodiment of the present invention, is a diagram explaining transition of a capacity of the non-aqueous electrolyte secondary battery overdischarged after the high-temperature and high-humidity storage test, and is a graph showing a relationship between the number of moles of the supporting salt and a discharge capacity and a capacity retention rate in a case where a molar concentration of a supporting salt contained in an electrolyte solution is set to 1 to 7 mol/L and the number of days stored is set to 28 days.
FIG. 11B is a diagram explaining an example of the non-aqueous electrolyte secondary battery according to the embodiment of the present invention, is a diagram explaining transition of a capacity of the non-aqueous electrolyte secondary battery overdischarged after the high-temperature and high-humidity storage test, and is a graph showing a relationship between the number of moles of the supporting salt and a discharge capacity and a capacity retention rate in a case where a molar concentration of a supporting salt contained in an electrolyte solution is set to 1 to 7 mol/L and the number of days stored is set to 40 days.

### [Description of Embodiments]

Hereinafter, embodiments of the non-aqueous electrolyte secondary battery according to the present invention will be described, and each configuration thereof will be described in detail with appropriate reference to the drawings. The non-aqueous electrolyte secondary battery described in the present invention specifically includes an active material used as a positive electrode or a negative electrode and an electrolyte solution, which are stored in a container, but the configuration according to the present invention can also be applied to electrochemical cells such as a lithium-ion capacitor.

### <First embodiment>

A non-aqueous electrolyte secondary battery 1 according to a first embodiment of the present invention will be described below with reference to FIG. 1.

### [Configuration of non-aqueous electrolyte secondary battery]

The non-aqueous electrolyte secondary battery 1 according to the first embodiment shown in FIG. 1 is a so-called coin (button)-type battery. The non-aqueous electrolyte secondary battery 1 is roughly configured to include, in a storage container 2, a positive electrode 10 containing a positive electrode active material and capable of intercalating and deintercalating lithium ions; a negative electrode 20 containing a negative electrode active material and capable of intercalating and deintercalating lithium ions; a separator 30 disposed between the positive electrode 10 and the negative electrode 20; a gasket 40 for sealing a storage space of the storage container 2; and an electrolyte solution 50 containing at least a supporting salt and an organic solvent.

The non-aqueous electrolyte secondary battery 1 according to the present embodiment includes a bottomed cylindrical positive electrode can 12; a lidded cylindrical (hat-shaped) negative electrode can 22 which is fixed to an opening portion 12a of the positive electrode can 12 with the interposed gasket 40 to form a storage space with the positive electrode can 12; and the storage container 2 in which the storage space is sealed by crimping a periphery of the opening portion 12a of the positive electrode can 12 inward, that is, toward a negative electrode can 22 side.

In the storage space sealed by the storage container 2, the positive electrode 10 provided on a positive electrode can 12 side and the negative electrode 20 provided on the negative electrode can 22 side are arranged opposite to each other with the separator 30, and the electrolyte solution 50 is filled therein. In addition, in the example shown in FIG. 1, a lithium foil 60 is interposed between the negative electrode 20 and the separator 30.

In addition, as shown in FIG. 1, the gasket 40 is narrowly inserted along an inner peripheral surface of the positive electrode can 12 and is connected to an outer periphery of the separator 30 to hold the separator 30.

In addition, the electrolyte solution 50 filled in the storage container 2 is impregnated in the positive electrode 10, the negative electrode 20, and the separator 30.

In the non-aqueous electrolyte secondary battery 1 of the example shown in FIG. 1, the positive electrode 10 is electrically connected to an inner surface of the positive electrode can 12 through a positive electrode current collector 14, and the negative electrode 20 is electrically connected to an inner surface of the negative electrode can 22 through a negative electrode current collector 24. In the present embodiment, the non-aqueous electrolyte secondary battery 1 including the positive electrode current collector 14 and the negative electrode current collector 24 as shown in FIG. 1 is described as an example, but the present invention is not limited thereto, and for example, a configuration in which the positive electrode can 12 also serves as the positive electrode current collector and the negative electrode can 22 also serves as the negative electrode current collector may be used.

Since the non-aqueous electrolyte secondary battery 1 according to the present embodiment is configured as described above, by transferring lithium ions from one of the positive electrode 10 or the negative electrode 20 to the other, it is possible to accumulate (charge) or release (discharge) electric charges.

In addition, in the non-aqueous electrolyte secondary battery 1 according to the present embodiment, at least one of the positive electrode 10 or the negative electrode 20 is in the form of a pellet containing an active material, a conductive aid, and a binder, and the separator 30 is formed of a glass fiber non-woven fabric.

In the non-aqueous electrolyte secondary battery 1, the electrolyte solution 50 contains, as the organic solvent, a mixed solution consisting of propylene carbonate (PC), ethylene carbonate (EC), and dimethoxyethane (DME) at a volume ratio in a range of {PC:EC:DME} = {0.5 to 1.5:0.5 to 1.5:1 to 3}, and contains, as the supporting salt, 2 to 7 (mol/L) of lithium bis(fluorosulfonyl)imide (LiFSI).

### (Positive electrode can and negative electrode can)

As shown in FIG. 1, the storage container 2 used in the non-aqueous electrolyte secondary battery 1 according to the present embodiment includes the bottomed cylindrical positive electrode can 12 and the negative electrode can 22 which is fixed to the opening portion 12a of the positive electrode can 12 with the interposed gasket 40 described later to form a storage space with the positive electrode can 12. The storage container 2 is a substantially coin-type (button-type) container in which the storage space is sealed by crimping the opening portion 12a of the positive electrode can 12 toward the negative electrode can 22 side. Therefore, the maximum inner diameter of the positive electrode can 12 is set larger than the maximum outer diameter of the negative electrode can 22.

As described above, the positive electrode can 12 constituting the storage container 2 is configured in a bottomed cylindrical shape, and has a circular opening portion 12a in plan view. As a material of the positive electrode can 12, known materials in the related art can be used without any limitation. For example, although stainless steels such as SUS316L and SUS329J4 are exemplary examples, other known stainless steels in the related art may be adopted. Furthermore, a metal material other than stainless steel may be used for the positive electrode can 12.

In addition, as described above, the negative electrode can 22 is configured in a lidded cylindrical shape (hat shape), and a tip portion 22a thereof is configured to enter the positive electrode can 12 through the opening portion 12a. As a material of the negative electrode can 22, known stainless steels in the related art, the same as the material of the positive electrode can 12, are exemplary examples, and for example, SUS316L, SUS329J4L, and the like can be adopted, the same as the material of the positive electrode can 12. Further, other known stainless steel in the related art, such as SUS304-BA, may be adopted. Furthermore, a metal material other than stainless steel may be used for the negative electrode can 20. In addition, for the negative electrode can 22, for example, a clad material in which copper, nickel, or the like is pressed against stainless steel can also be used.

A plate thickness of a metal plate material used for the positive electrode can 12 or the negative electrode can 22 is generally approximately 0.1 to 0.3 mm, and for example, the positive electrode can 12 or the negative electrode can 22 can have an overall average plate thickness of approximately 0.20 mm.

In addition, in the example shown in FIG. 1, the tip portion 22a of the negative electrode can 22 has a shape folded along an outer surface of the negative electrode can 22, but the present invention is not limited thereto. For example, a case of using a negative electrode can 22 which does not have the above-described folded shape and has an end surface of the metal plate material as the tip portion 22a can be applied to the present invention.

In addition, as a non-aqueous electrolyte secondary battery to which the configuration described in detail in the present embodiment can be applied, for example, in addition to 920 size (outer diameter ϕ 9.5 mm × height 2.0 mm), which is a general size of a coin-type non-aqueous electrolyte secondary battery, batteries of various sizes are exemplary examples.

With the non-aqueous electrolyte secondary battery 1 according to the present embodiment, by arranging each battery element in the storage space of the storage container 2 in which the positive electrode can 12 and the negative electrode can 22 are sealed with an optimal structure, the storage container 2 has a structure with excellent sealing property, and it is possible to effectively prevent volatilization of the electrolyte solution 50 and penetration of moisture contained in the air into the battery. Therefore, even in a small-sized coin-type non-aqueous electrolyte secondary battery, by combining the electrolyte solution 50 in which the formulation of the organic solvent and the supporting salt is optimized, the battery structure, high output characteristics and high capacity characteristics are obtained, which will be described later in detail.

More specifically, in the non-aqueous electrolyte secondary battery 1 of the example shown in FIG. 1, the storage container 2 has a structure in which the gasket 40 described later is interposed between an inner bottom portion 12b and an inner side portion 12c of the positive electrode can 12 and the negative electrode can 22 for insulating and sealing. In the present embodiment, by adopting an insulating sealing structure with an optimally interposed gasket 40 between the positive electrode can 12 and the negative electrode can 22, the electrical insulation and sealing properties are further enhanced. In a case where such a structure is combined with the formulation of the electrolyte solution 50, which will be described in detail later, even with the small-sized coin-type non-aqueous electrolyte secondary battery 1 as shown in the figure, both excellent high output characteristics and high capacity characteristics are obtained more remarkably.

### (Gasket)

As shown in FIG. 1, the gasket 40 is formed in an annular shape along the inner peripheral surface of the positive electrode can 12, and the tip portion 22a of the negative electrode can 22 is disposed inside an annular groove 41 thereof.

As a material for the gasket 40, for example, plastic resins such as a polypropylene resin (PP), a polyphenyl sulfide (PPS), polyethylene terephthalate (PET), polyamide, a liquid crystal polymer (LCP), a tetrafluoroethylene-perfluoroalkyl vinyl ether copolymer resin (PFA), a polyether ether ketone resin (PEEK), a polyethernitrile resin (PEN), a polyetherketone resin (PEK), a polyarylate resin, a polybutylene terephthalate resin (PBT), a polycyclohexanedimethylene terephthalate resin, a polyethersulfone resin (PES), a polyaminobismaleimide resin, a polyether imide resin, and a fluorine resin are exemplary examples. Among these, from the viewpoint of further improving sealing performance of the non-aqueous electrolyte secondary battery by preventing large deformation of the gasket during use and storage in high-temperature environments, it is preferable to use a polypropylene resin for the gasket 40.

In addition, for the gasket 40, a material obtained by adding glass fiber, mica whisker, fine ceramic powder, or the like to the above-described material in an amount of 30% by mass or less can be suitably used. By using such a material, it is possible to suppress large deformation of the gasket due to high temperature and prevent leakage of the electrolyte solution 50.

In addition, a sealing agent may be applied to an inner surface of the annular groove of the gasket 40. As such a sealing agent, asphalt, epoxy resin, polyamide-based resin, butyl rubber-based adhesive, or the like can be used. In addition, the sealing agent is applied to the inside of the annular groove 41 and then dried before use.

The gasket 40 is wedged between the positive electrode can 12 and the negative electrode can 22, and at least a part thereof is compressed, but compressibility at this time is not particularly limited, and may be set within a range in which the inside of the non-aqueous electrolyte secondary battery 1 can be reliably sealed and the gasket 40 is not broken.

### (Electrolyte solution)

As described above, the electrolyte solution 50 used in the non-aqueous electrolyte secondary battery 1 according to the present embodiment contains, as the organic solvent, a mixed solution consisting of propylene carbonate (PC), ethylene carbonate (EC), and dimethoxyethane (DME) at a volume ratio in a range of {PC:EC:DME} = {0.5 to 1.5:0.5 to 1.5:1 to 3}, and contains, as the supporting salt, 2 to 7 (mol/L) of lithium bis(fluorosulfonyl)imide (LiFSI).

Such an electrolyte solution 50 is usually obtained by dissolving the supporting salt in a non-aqueous solvent such as an organic solvent, and characteristics of the electrolyte solution 50 are determined in consideration of heat resistance, viscosity, or the like required for the electrolyte solution 50.

In general, in a case where an electrolyte solution containing an organic solvent is used in the non-aqueous electrolyte secondary battery, since solubility of a lithium salt is poor, temperature dependence of conductivity increases, and there is a problem in that characteristics at low temperatures are significantly lower than those at room temperature. On the contrary, in a case where, in order to improve the low-temperature characteristics, for example, asymmetrically structured ethyl methyl carbonate or acetic acid ester, which is a chain-like carbonate ester, is used as the organic solvent for the electrolyte solution, there is a problem in that characteristics of the non-aqueous electrolyte secondary battery in high temperatures are deteriorated. Moreover, even in a case where an organic solvent such as ethyl methyl carbonate is used for the electrolyte solution, the solubility of the lithium salt is still poor, and there is a limit to improving the low-temperature characteristics.

In addition, in the small-sized coin-type non-aqueous electrolyte secondary battery, in order to obtain high output characteristics capable of supplying a large current, it is necessary to adjust the formulation of the organic solvent in the electrolyte solution as well as the type and content of the supporting salt to the optimum range.

For this reason, in the present embodiment, first, as the organic solvent used in the electrolyte solution 50, a mixed solvent containing PC and EC, which are cyclic carbonate solvents, and DME, which is a chain-like ether solvent, in an appropriate mixing ratio is used. As a result, it is possible to obtain the non-aqueous electrolyte secondary battery 1 which can maintain a sufficient discharge capacity over a wide temperature range including in low-temperature environments.

Specifically, by using, as the cyclic carbonate solvent, PC and EC, which have a high dielectric constant and high solubility of the supporting salt, the discharge capacity of the non-aqueous electrolyte secondary battery 1 is increased. In addition, since PC and EC have high boiling points, even in a case where the electrolyte solution is used or stored in high-temperature environments, the electrolyte solution is difficult to volatilize.

In addition, by using, in combination with EC, PC having a lower melting point than EC as the cyclic carbonate solvent, it is possible to improve the low-temperature characteristics.

In addition, by using DME having a low melting point as the chain-like ether solvent, the low-temperature characteristics are improved. In addition, since DME has a low viscosity, electrical conductivity of the electrolyte solution is improved. Furthermore, DME solvates Li ions, thereby increasing the discharge capacity of the non-aqueous electrolyte secondary battery.

The cyclic carbonate solvent has a structure represented by (Chemical Formula 1), and propylene carbonate (PC), ethylene carbonate (EC), butylene carbonate (BC), trifluoroethylene carbonate (TFPC), chloroethylene carbonate (ClEC), trifluoroethylene carbonate (TFEC), difluoroethylene carbonate (DFEC), and vinylene carbonate (VEC) are exemplary examples. In the non-aqueous electrolyte secondary battery 1 according to the present invention, in particular, from the viewpoint of ease of forming a film on the negative electrode 20 and improvement of the low-temperature characteristics, and viewpoint of improving a capacity retention rate at high temperatures, as the cyclic carbonate solvent having the structure represented by (Chemical Formula 1), two types of PC and EC are used.

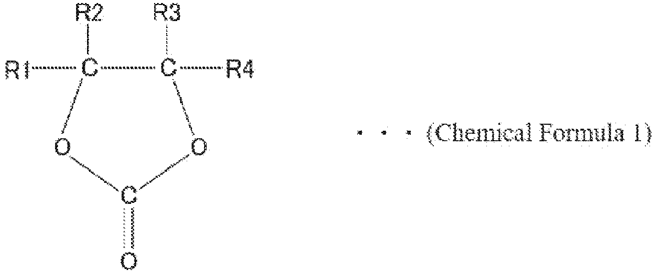

Here, in (Chemical Formula 1), R1, R2, R3, and R4 represent any one of hydrogen, fluorine, chlorine, an alkyl group having 1 to 3 carbon atoms, or a fluorinated alkyl group. In addition, R1, R2, R3, and R4 in (Chemical Formula 1) may be the same or different from each other.

In the present embodiment, as described above, by using, as the cyclic carbonate solvent, PC and EC, which have a high dielectric constant and high solubility of the supporting salt, it is possible to obtain a large discharge capacity. In addition, since PC and EC have high boiling points, in a case where the electrolyte solution is used or stored in high-temperature environments, the electrolyte solution is difficult to volatilize. Furthermore, by using, in combination with EC, PC having a lower melting point than EC as the cyclic carbonate solvent, excellent low-temperature characteristics are obtained.

The chain-like ether solvent has a structure represented by (Chemical Formula 2), and 1,2-dimethoxyethane (DME) and 1,2-diethoxyethane (DEE) are exemplary examples.

In the present embodiment, in particular, from the viewpoint of improving the conductivity and improving the low-temperature characteristics while securing the capacity at room temperature, as the chain-like ether solvent having the structure represented by (Chemical Formula 2), DME which easily solvates lithium ions is used.

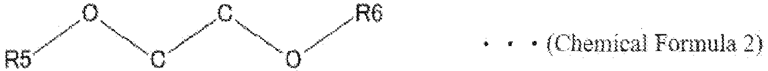

Here, in (Chemical Formula 2), R5 and R6 represent any one of hydrogen, fluorine, chlorine, an alkyl group having 1 to 3 carbon atoms, or a fluorinated alkyl group. In addition, R5 and R6 may be the same or different from each other.

In the present embodiment, as described above, by using DME having a low melting point as the chain-like ether solvent, the low-temperature characteristics are improved. In addition, since DME has a low viscosity, electrical conductivity of the electrolyte solution is improved. Furthermore, since DME solvates Li ions, a large discharge capacity can be obtained as the non-aqueous electrolyte secondary battery.

In the present embodiment, a blending ratio of each organic solvent in the solvent of the electrolyte solution 50 is set in a range of {PC:EC:DME} = 0.5 to 1.5:0.5 to 1.5:1 to 3 by volume ratio. In addition, the blending ratio in the solvent is more preferably set in a range of 0.8 to 1.2:0.8 to 1.2:1.5 to 2.5 by volume ratio, and most preferably set to roughly {PC:EC:DME} = {1:1:2}. In a case where the blending ratio of the organic solvent is within the above-described range, as described above, an effect of improving the low-temperature characteristics without impairing the capacity retention rate at high temperature or room temperature can be obtained more remarkably.

More specifically, in a case where the blending ratio of the propylene carbonate (PC), which is the cyclic carbonate solvent, is equal to or more than the lower limit of the above-described range, by using, in combination with EC, PC having a lower melting point than EC, the effect of improving the low-temperature characteristics can be obtained remarkably.

On the other hand, since PC has a lower dielectric constant than EC, it is not possible to increase the concentration of the supporting salt, so that, in a case where the content is too large, it may be difficult to obtain a large discharge capacity. Therefore, it is preferable to limit the blending ratio to equal to or less than the upper limit of the above-described range.

In addition, in the organic solvent, in a case where the blending ratio of the ethylene carbonate (EC), which is the cyclic carbonate solvent, is equal to or more than the lower limit of the above-described range, the dielectric constant of the electrolyte solution 50 and the solubility of the supporting salt are increased, and the discharge capacity of the non-aqueous electrolyte secondary battery is increased.

On the other hand, since EC has poor electrical conductivity due to its high viscosity and has a high melting point, in a case where the content is too large, the low-temperature characteristics may be deteriorated. Therefore, it is preferable to limit the blending ratio to equal to or less than the upper limit of the above-described range.

Furthermore, by setting the blending ratio of EC in the organic solvent to the above-described range, it is possible to suppress an increase in internal resistance in low-temperature environments.

In addition, in the organic solvent, in a case where the blending ratio of the dimethoxyethane (DME), which is the chain-like ether solvent, is equal to or more than the lower limit of the above-described range, since a predetermined amount of DME having a low melting point is contained in the organic solvent, the effect of improving the low-temperature characteristics can be obtained remarkably. In addition, since DME has a low viscosity, it is possible to improve the electrical conductivity and obtain a large discharge capacity by solvating Li ions.

On the other hand, since DME has a lower dielectric constant, it is not possible to increase the concentration of the supporting salt, so that, in a case where the content is too large, it may be difficult to obtain a large discharge capacity. Therefore, it is preferable to limit the blending ratio to equal to or less than the upper limit of the above-described range.

Furthermore, by setting the blending ratio of DME in the organic solvent to the above-described range, it is possible to suppress a voltage drop at the initial stage of discharge.

In the non-aqueous electrolyte secondary battery 1 according to the present embodiment, as the supporting salt used in the electrolyte solution 50, lithium bis(fluorosulfonyl)imide (LiFSI) is used, and the content thereof in the electrolyte solution 50 is in a range of 2 to 7 mol/L. In addition, the content of the supporting salt (LiFSI) in the electrolyte solution 50 can be determined within the above-described range in consideration of the type of the positive electrode active material described later.

By setting the formulation of the organic solvent contained in the electrolyte solution 50 as described above and by containing, as the supporting salt, LiFSI having excellent conductivity at the molar ratio within the above-described range, a large current can be obtained even with a small-sized coin-type non-aqueous electrolyte secondary battery. In addition, by containing LiFSI in the electrolyte solution 50 at the molar ratio within the above-described range, a voltage drop at the initial stage of discharge can be suppressed within a certain range, so that a sufficient discharge capacity can be maintained even at a mA-level discharge.

Furthermore, the detailed mechanism is not clear, but by containing the supporting salt composed of the above-described lithium compound in the electrolyte solution 50 at an optimum molar concentration, even in a case where the electrolyte solution deteriorates, a necessary and sufficient amount of lithium can be secured. As a result, it is possible to obtain the effect of suppressing a decrease in discharge capacity even in a case where the battery is stored for a long period of time or in a case where the battery is used for a long period of time.

Even in a case where the concentration of the supporting salt in the electrolyte solution 50 is more than the upper limit of the above-described range, the effect of maintaining the discharge capacity and the effect of increasing the discharge current reach a peak, and in a case of being less than the above-described lower limit, although a certain effect is observed in improving the low-temperature characteristics, it is difficult to obtain the effect of maintaining the discharge capacity and the effect of increasing the discharge current. Therefore, even in a case where the concentration of the supporting salt in the electrolyte solution 50 is too high or too low, the battery characteristics may be adversely affected, so that the above-described range is preferable.

In the present embodiment, the concentration of the supporting salt in the electrolyte solution 50, that is, the concentration of LiFSI is more preferably 4 to 7 (mol/L).

In a case where the concentration of LiFSI having excellent conductivity in the electrolyte solution 50 is within the above-described range, although the detailed mechanism is not clear, an effect of improving electrical characteristics, specifically, overdischarge characteristics of the non-aqueous electrolyte secondary battery after being stored under the conditions of high temperature, high humidity, and overdischarge is obtained. As a result, even in a case where overdischarge occurs, an effect of preventing deterioration of the non-aqueous electrolyte secondary battery is obtained. Similarly, in a case where the concentration of LiFSI in the electrolyte solution 50 is within the above-described range, although the detailed mechanism is not clear, the internal resistance of the non-aqueous electrolyte secondary battery can be effectively reduced.

In addition, as described above, in a case of the storage container 2 having a structure in which the gasket 40 described later is interposed between the inner bottom portion 12b and the inner side portion 12c of the positive electrode can 12 and the negative electrode can 22 for insulating and sealing, it is preferable that the electrolyte solution 50 contain 3 to 4 (mol/L) of LiFSI as the supporting salt. In the coin-type non-aqueous electrolyte secondary battery 1 having the insulating sealing structure as shown in FIG. 1, by limiting the content of LiFSI contained in the electrolyte solution 50 to the above-described range, a larger current can be generated and a sufficient discharge capacity can be maintained. As a result, even with the small-sized coin-type non-aqueous electrolyte secondary battery 1, further excellent high output characteristics and high capacity characteristics.

In the present embodiment, as described above, first, by setting the organic solvent used in the electrolyte solution 50 to the above-described formulation, it is possible to prevent the viscosity of the electrolyte solution from increasing in a low-temperature environment from room temperature to -30°C to -40°C and to suppress hindrance of transfer of electric charges. As a result, discharge characteristics in low-temperature environments can be improved and sufficient discharge capacity over a wide temperature range can be maintained.

### (Positive electrode)

The positive electrode 10 is not particularly limited as long as it contains a positive electrode active material formed of a lithium manganese oxide, and conventionally known materials in this field can be used. In addition, as the positive electrode 10, in addition to the above-described positive electrode active material, a material obtained by mixing polyacrylic acid as a binding agent and graphite or the like as a conductive aid can be used, for example, in the form of a pellet.

As the positive electrode active material contained in the positive electrode 10, for example, LiMn₂O₄ having a spinel crystal structure and lithium manganese oxides such as Li₄Mn₅O₁₂ are exemplary examples. Among such lithium manganese oxides, in particular, those in which a part of Mn is replaced with Co, such as Li₁₊ₓCo_{y}Mn_{2-x-y}O₄ (0 ≤ x ≤ 0.33 and 0 < y ≤ 0.2), are preferable. In this way, by using a positive electrode active material in which a transition metal element such as Co or Ni is added to the lithium manganese oxide and a part thereof is replaced with the transition metal element, the discharge characteristics are further improved, and high output characteristics and capacity characteristics are more stabilized.

In the present embodiment, by using, in the positive electrode 10, the positive electrode active material formed of the lithium manganese oxide having the above-described formulation, as described above, even with the small-sized button-type non-aqueous electrolyte secondary battery 1 can operate in a wide temperature range and more remarkably achieve excellent high output characteristics and high capacity characteristics.

In addition, in the present embodiment, the positive electrode active material may include not only one of the above-described lithium manganese oxides, but also a plurality thereof.

In addition, in a case of using a granular positive electrode active material formed of the above-described material, a particle size (D50) thereof is not particularly limited, and is preferably 0.1 to 100 µm, more preferably 10 to 50 µm, and still more preferably 20 to 40 µm.

In a case where the particle size (D50) of the positive electrode active material is less than the lower limit value of the above-described preferred range, when the non-aqueous electrolyte secondary battery is exposed to high temperatures, reactivity increases, making it difficult to handle, and in a case of being more than the upper limit value, a discharge rate may be reduced.

The "particle size (D50) of the positive electrode active material" in the present invention is a particle size measured using a conventionally known laser diffraction method, and means a median size.

The content of the positive electrode active material in the positive electrode 10 is determined in consideration of the discharge current, discharge capacity, and the like required for the non-aqueous electrolyte secondary battery 1, and is preferably 50% to 95% by mass, for example. In a case where the content of the positive electrode active material is equal to or more than the lower limit value of the above-described preferred range, a sufficient discharge current and discharge capacity can be easily obtained, and in a case of being equal to or less than the preferred upper limit value, an effect of facilitating molding of the positive electrode 10 is obtained.

The positive electrode 10 may contain a conductive aid (hereinafter, the conductive aid used in the positive electrode 10 may be referred to as "positive electrode conductive aid").

As the positive electrode conductive aid, carbonaceous materials such as furnace black, ketjen black, acetylene black, and graphite are exemplary examples.

One kind of the above-described positive electrode conductive aids may be used alone, or two or more thereof may be used in combination.

In addition, the content of the positive electrode conductive aid in the positive electrode 10 is preferably 1% to 25% by mass and more preferably 2% to 15% by mass. In a case where the content of the positive electrode conductive aid is equal to or more than the lower limit value of the above-described preferred range, sufficient conductivity can be easily obtained. In addition, it is easy to perform molding in a case where the electrode is molded in the form of a pellet. On the other hand, in a case where the content of the positive electrode conductive aid in the positive electrode 10 is equal to or less than the upper limit value of the above-described preferred range, a sufficient discharge capacity by the positive electrode 10 can be easily obtained.

The positive electrode 10 may contain a binder (hereinafter, the binder used in the positive electrode 10 may be referred to as "positive electrode binder").

As the positive electrode binder, conventionally known substances can be used, and for example, polytetrafluoroethylene (PTFE), polyvinylidene fluoride (PVDF), styrene-butadiene rubber (SBR), polyacrylic acid (PA), carboxymethylcellulose (CMC), and polyvinyl alcohol (PVA) are exemplary examples. Among these, polyacrylic acid is preferable, and crosslinked polyacrylic acid is more preferable.

In addition, one kind of the above-described positive electrode binders may be used alone, or two or more thereof may be used in combination.

In a case of using the polyacrylic acid as the positive electrode binder, it is preferable to adjust the polyacrylic acid to pH 3 to 10 in advance. For adjusting the pH in this case, for example, an alkali metal hydroxide such as lithium hydroxide or an alkaline earth metal hydroxide such as magnesium hydroxide can be used.

The content of the positive electrode binder in the positive electrode 10 can be, for example, 1% to 20% by mass.

The size of the positive electrode 10 is determined according to the size of the non-aqueous electrolyte secondary battery 1.

In addition, the thickness of the positive electrode 10 in the state of being stored inside the positive electrode can 12 is also determined according to the size of the non-aqueous electrolyte secondary battery 1, and for example, in a case where the non-aqueous electrolyte secondary battery 1 is a coin-type backup battery for various electronic devices, it is approximately 300 to 1000 µm.

The positive electrode 10 can be produced by a conventionally known production method.

For example, as the production method of the positive electrode 10, a method in which a positive electrode mixture is formed by mixing the positive electrode active material and optionally at least one of the positive electrode conductive aid and the positive electrode binder, and the positive electrode mixture is pressure-molded into a pellet shape such as a disc shape is an exemplary example.

The pressure in the case of forming the positive electrode 10 by the above-described pressure molding is determined in consideration of the type of the positive electrode conductive aid, and the like, and for example, the pressure can be set to 0.2 to 5 ton/cm².

As the positive electrode current collector 14, conventionally known ones can be used, and for example, a current collector including a conductive resin adhesive or the like using carbon as a conductive filler is an exemplary example.

Here, in the non-aqueous electrolyte secondary battery 1 according to the present embodiment, as described above, at least one of the positive electrode 10 or the negative electrode 20 is configured in the form of a pellet. In the present embodiment, in a case where the positive electrode 10 is configured in the form of a pellet, the pellet-like positive electrode 10 is disposed in a through-hole portion of the gasket 40 formed in a ring shape in plan view, the details of which will be described later, in the inner bottom portion 12b of the positive electrode can 12. In such a configuration, by disposing a conventionally known conductive adhesive between the inner bottom portion 12b of the positive electrode can 12 and the positive electrode 10, that is, between the positive electrode current collector 14 disposed in the inner bottom portion 12b of the positive electrode can 12 and the positive electrode 10 as shown in the example of FIG. 1, the positive electrode 10 and the inner bottom portion 12b are adhered to each other through the positive electrode current collector 14.

### (Negative electrode)

In the negative electrode 20 used in the present embodiment, as the negative electrode active material, a material containing SiOx (0 < X < 2) is an exemplary example. As the negative electrode 20, in addition to the above-described negative electrode active material, a material obtained by mixing an appropriate binder, polyacrylic acid as a binding agent, and graphite or the like as a conductive aid can be used, for example, in the form of a pellet.

As the negative electrode active material used in the negative electrode 20, first, a material formed of SiO or SiO₂, that is, a silicon oxide represented by SiOx (0 < X < 2) described above is an exemplary example. By using silicon oxide having the above-described formulation for the negative electrode active material, the non-aqueous electrolyte secondary battery 1 can be used at a high voltage, and cycle characteristics are improved.

In addition, in the negative electrode 20, the negative electrode active material may contain, in addition to SiOx (0 < X < 2) described above, at least one of Li-Al alloy, Si, WO₂, and WO₃, which is an alloy-based negative electrode other than carbon.

By using the above-described material as the negative electrode active material for the negative electrode 20, reaction between the electrolyte solution 50 and the negative electrode 20 is suppressed during charge and discharge cycles, decrease in capacity can be prevented, and the effect of improving the cycle characteristics is obtained.

Furthermore, since the negative electrode 20 contains the negative electrode active material formed of SiOx (0 < X < 2) having at least a part of a surface coated with a carbon (C), the conductivity of the negative electrode 20 is improved, and an increase in internal resistance is suppressed particularly in low-temperature environments. As a result, a voltage drop at the initial stage of discharge is suppressed, the high capacity characteristics including the initial capacity are more stabilized, a large current can be stably supplied, and the effect of further stabilizing the high output characteristics is obtained.

In a case where SiOx (0 < X < 2) described above is used as the negative electrode active material, it is sufficient that at least a part of a surface of the particles formed of SiOx (0 < X < 2) be coated with the carbon, but it is preferable that the entire surface be coated because the above-described effects are more remarkable.

A method of coating the surface of the SiOx (0 < X < 2) particles with carbon is not particularly limited, and, for example, methods such as physical vapor deposition (PVD) and chemical vapor deposition (CVD) using a gas containing an organic substance such as methane and acetylene are exemplary examples.

In a case where the SiOx (0 < X < 2) having at least a part of a surface coated with a carbon is used as the negative electrode active material, a particle size (D50) thereof is not particularly limited, and for example, is preferably 0.1 to 30 µm and more preferably 1 to 10 µm. In a case where the particle size (D50) of the negative electrode active material is within the above-described range, when the non-aqueous electrolyte secondary battery is charged and discharged, since the conductivity is maintained even in a case where the negative electrode expands or contracts, deterioration of charge and discharge characteristics such as the cycle characteristics is suppressed. In a case where the particle size (D50) of the negative electrode active material is less than the lower limit value of the above-described preferred range, for example, when the non-aqueous electrolyte secondary battery is exposed to high temperatures, reactivity increases, making it difficult to handle, and in a case of being more than the upper limit value, a discharge rate may be reduced. The particle size (D50) of the negative electrode active material (SiOx (0 < X < 2)) described in the present specification is a particle size in a state in which at least part of the surface of SiOₓ (0< X <2) is coated with carbon.

Furthermore, in the present embodiment, it is more preferable that the negative electrode active material in the negative electrode 20 contain both lithium (Li) and SiOₓ (0< X <2), and a molar ratio (Li/SiOx) thereof is in a range of 3.7 to 4.9. In this way, in a case where the negative electrode active material contains both lithium (Li) and SiOₓ and the molar ratio thereof is within the above-described range, the effect of preventing abnormal charging and the like can be obtained.

In a case where the above-described molar ratio (Li/SiOx) is less than 3.7, since the amount of Li is too small, for example, in a case where the battery is used or stored for a long period of time in a high-temperature environment, Li becomes insufficient, resulting in a decrease in discharge capacity.

On the other hand, in a case where the above-described molar ratio (Li/SiOx) is more than 4.9, the amount of Li is too large, which may lead to abnormal charging, In addition, since the metal Li remains without being incorporated into SiOx, the internal resistance may increase and the discharge capacity may decrease.

Furthermore, in the present embodiment, it is more preferable that the molar ratio (Li/SiOx) in the above-described range be set by selecting a more appropriate range according to the type of the above-described positive electrode active material contained in the positive electrode 10. For example, in a case where lithium titanate is used as the positive electrode active material, the above-described molar ratio (Li/SiOx) in the negative electrode active material is more preferably set in a range of 4.0 to 4.7. In addition, in a case where the lithium manganese oxide is used as the positive electrode active material, the above-described molar ratio (Li/SiOx) in the negative electrode active material is more preferably set in a range of 3.9 to 4.9. In this way, by setting the molar ratio (Li/SiOx) of the negative electrode active material within a range according to the type of the positive electrode active material, as described above, the effect of preventing abnormal charging and the like by suppressing the rise in initial resistance, and the effect that a sufficient discharge capacity can be obtained, for example, even in a case of being stored or used for a long period of time in a high-temperature environment are more remarkable.

The content of the negative electrode active material in the negative electrode 20 is determined in consideration of the discharge capacity and the like required for the non-aqueous electrolyte secondary battery 1, and is preferably 50% by mass or more and more preferably 60% to 80% by mass, for example.

In the negative electrode 20, in a case where the content of the negative electrode active material formed of the above-described material is equal to or more than the lower limit value of the above-described preferred range, a sufficient discharge capacity can be easily obtained, and in a case of being equal to or less than the upper limit value, it is easy to mold the negative electrode 20.

The negative electrode 20 may contain a conductive aid (hereinafter, the conductive aid used in the negative electrode 20 may be referred to as "negative electrode conductive aid"). The negative electrode conductive aid is the same as the positive electrode conductive aid.

The negative electrode 20 may contain a binder (hereinafter, the binder used in the negative electrode 20 may be referred to as "negative electrode binder").

As the negative electrode binder, polyvinylidene fluoride (PVDF), styrene-butadiene rubber (SBR), polyacrylic acid (PA), carboxymethylcellulose (CMC), polyimide (PI), and polyimide-amide (PAI) are exemplary examples. Among these, polyacrylic acid is preferable, and crosslinked polyacrylic acid is more preferable.

In addition, one kind of the above-described negative electrode binders may be used alone, or two or more thereof may be used in combination. In a case of using the polyacrylic acid as the negative electrode binder, it is preferable to adjust the polyacrylic acid to pH 3 to 10 in advance. For adjusting the pH in this case, for example, an alkali metal hydroxide such as lithium hydroxide or an alkaline earth metal hydroxide such as magnesium hydroxide can be added.

The content of the negative electrode binder in the negative electrode 20 is, for example, 1% to 20% by mass.

The shape (for example, pellet shape), size, and thickness of the negative electrode 20 are the same as the shape, size, and thickness of the positive electrode 10.

In addition, in the non-aqueous electrolyte secondary battery 1 shown in FIG. 1, the lithium foil 60 is provided on a surface of the negative electrode 20, that is, between the negative electrode 20 and the separator 30 described later.

As a production method of the negative electrode 20, for example, a method in which a negative electrode mixture is prepared by mixing the above-described material as the negative electrode active material, and optionally graphite as the negative electrode conductive aid and/or the negative electrode binder, and the negative electrode mixture is pressure-molded into a pellet shape such as a disc shape is an exemplary example.

The pressure in the case of pressure-molding the negative electrode 20 is determined in consideration of the type of the negative electrode conductive aid, and the like, and for example, the pressure can be set to 0.2 to 5 ton/cm².

In addition, the same material as that of the positive electrode current collector 14 can be used for the negative electrode current collector 24.

As described above, in the present embodiment, at least one of the positive electrode 10 or the negative electrode 20 is configured in the form of a pellet. For example, in a case where the negative electrode 20 is configured in the form of a pellet, as in the case of the positive electrode 10, the pellet-like negative electrode 20 is disposed in the through-hole portion of the gasket 40 formed in a ring shape in plan view, inside the negative electrode can 22. In such a configuration, by disposing a conventionally known conductive adhesive between an inner top portion 22b of the negative electrode can 22 and the negative electrode 20, that is, between the negative electrode current collector 24 disposed in the inner top portion 22b of the negative electrode can 22 and the pellet-like negative electrode 20 as shown in the example of FIG. 1, the negative electrode 20 and the inner top portion 22b are adhered to each other through the negative electrode current collector 24.

In addition, the lithium foil 60 is disposed on a surface of the negative electrode 20 after the negative electrode 20 is disposed inside of the negative electrode can 22.

### (Separator)

The separator 30 is interposed between the positive electrode 10 and the negative electrode 20, and an insulating film having high ion permeability, excellent heat resistance, and predetermined mechanical strength is used.

In the present embodiment, the separator 30 is formed of a glass fiber non-woven fabric. Since the glass fiber has excellent mechanical strength and high ion permeability, by adopting the glass fiber non-woven fabric for the separator 30, it is possible to reduce the internal resistance and improve the discharge capacity.

The thickness of the separator 30 is determined in consideration of the size of the non-aqueous electrolyte secondary battery 1, the material of the separator 30, and the like, and can be, for example, approximately 5 to 300 µm.

With the non-aqueous electrolyte secondary battery 1 according to the present embodiment, by combining the configuration in which the formulation of the electrolyte solution 50 is optimized and the configuration in which the arrangement structure of each battery element inside the storage container 2 is optimized, it is possible to realize a non-aqueous electrolyte secondary battery 1 which is small in size, has excellent high output characteristics, and also has excellent high capacity characteristics.

### <Second embodiment>

A non-aqueous electrolyte secondary battery according to a second embodiment of the present invention will be described below with reference to FIG. 2.

In a non-aqueous electrolyte secondary battery 100 according to the second embodiment described below, the same configurations as those of the non-aqueous electrolyte secondary battery 1 according to the first embodiment shown in FIG. 1 may be denoted by the same reference numerals, and details thereof may not be described.

As shown in FIG. 2, similar to the non-aqueous electrolyte secondary battery 1 according to the first embodiment shown in FIG. 1, the non-aqueous electrolyte secondary battery 100 according to the present embodiment is configured as a coin (button)-type battery, and includes, in a storage container 102, a positive electrode 110 containing a positive electrode active material and capable of intercalating and deintercalating lithium ions; a negative electrode 120 containing a negative electrode active material and capable of intercalating and deintercalating lithium ions; a separator 130 disposed between the positive electrode 110 and the negative electrode 120; a gasket 140 for sealing a storage space of the storage container 102; and an electrolyte solution 50 containing at least a supporting salt and an organic solvent.

The non-aqueous electrolyte secondary battery 100 according to the present embodiment differs from the non-aqueous electrolyte secondary battery 1 according to the first embodiment in that the storage container 102 has a structure in which the positive electrode 110 is disposed to cover an entire inner bottom portion 112b of a positive electrode can 112 and the gasket 140 is interposed between an inner side portion 112c of the positive electrode can 112 and the positive electrode 110, and a negative electrode can 122 for insulating and sealing.

In the non-aqueous electrolyte secondary battery 100 according to the present embodiment, by adopting the insulating sealing structure as described above, electrical insulation and sealing properties are enhanced. In addition, as will be described in detail in Examples, even with a small-sized coin-type non-aqueous electrolyte secondary battery, further excellent high output characteristics and high capacity characteristics can be obtained.

In the non-aqueous electrolyte secondary battery 100 according to the present embodiment, the electrolyte solution 50 having the same formulation as that of the non-aqueous electrolyte secondary battery 1 according to the first embodiment can be adopted.

On the other hand, in the present embodiment, the formulation of the electrolyte solution 50 is the same as that of the non-aqueous electrolyte secondary battery 1 according to the first embodiment with respect to the formulation ratio of the organic solvent, but the content of LiFSI as the supporting salt is more preferably in a range of 2 to 3 (mol/L).

In addition to adopting the battery structure shown in FIG. 2 by setting the content of LiFSI contained in the electrolyte solution 50 to 2 to 3 (mol/L), which is lower than in the first embodiment, both excellent high output characteristics and high capacity characteristics are obtained more remarkably.

In the non-aqueous electrolyte secondary battery 100 according to the present embodiment, the detailed mechanism by which the above-described effects are obtained by combining the battery structure and the formulation of the electrolyte solution 50 as described above is not clear. However, the present embodiment employs a structure in which the positive electrode 110 having a larger outer shape than the first embodiment is provided, and the positive electrode 110 is disposed so as to cover the entire surface of the inner bottom portion 112b of the positive electrode can 112. As a result, the distance between the negative electrode 120 and the positive electrode 110 increases due to the internal structure of the battery, so that, for example, the distance between a vicinity of the peripheral portion of the negative electrode 120 disposed inside the negative electrode can 122, which is smaller than the positive electrode can 112, and a vicinity of the peripheral portion of the positive electrode 110 increases. In the present embodiment, by adopting the above-described structure, this is probably because the above-described effects are more likely obtained in a case where an electrolyte solution having a lower concentration and a lower viscosity than those in the first embodiment is used.

With the non-aqueous electrolyte secondary battery 100 according to the present embodiment, similar to the non-aqueous electrolyte secondary battery 1 according to the first embodiment, by combining the configuration in which the formulation of the electrolyte solution 50 is optimized and the configuration in which the arrangement structure of each battery element inside the storage container 102 is optimized, the non-aqueous electrolyte secondary battery 100 is small in size, has excellent high output characteristics, and also has excellent high capacity characteristics.

### <Other aspects of non-aqueous electrolyte secondary battery>

In the present embodiment, as one embodiment of the non-aqueous electrolyte secondary battery, a non-aqueous electrolyte secondary battery having a coin-type structure has been described in which a positive electrode can and a negative electrode can formed of stainless steel are used and provided in a crimped storage container, but the present invention is not limited thereto. For example, the present invention can be applied to a non-aqueous electrolyte secondary battery having a structure in which an opening portion of a ceramic container body is sealed with a ceramic lid by heat treatment such as seam welding using a metal sealing member.

Furthermore, the configuration according to the present invention can also be applied to electrochemical cells such as a lithium-ion capacitor.

### <Uses of non-aqueous electrolyte secondary battery>

As described above, since the non-aqueous electrolyte secondary battery 1 according to the present embodiment can supply a large current over a wide temperature range, can maintain a sufficient discharge capacity even at a mA-level discharge, and can provide high output characteristics and high capacity characteristics with a small size, for example, the non-aqueous electrolyte secondary battery 1 according to the present embodiment is suitable for use not only as a backup power source in various electronic devices, but also as a main power source which requires a high current.

### <Effect>

As described above, according to the non-aqueous electrolyte secondary batteries 1 and 100 of the embodiments of the present invention, first, by using the optimum ratio of PC and EC in the organic solvent as the electrolyte solution 50, it is possible to perform operation in a wide temperature range, and by using the optimum ratio of DME, the low-temperature characteristics are improved, so that the electrical conductivity of the electrolyte solution 50 is improved. In addition, by containing LiFSI in the electrolyte solution 50 as the supporting salt at the optimum range, both high output characteristics and high capacity characteristics are obtained.

Furthermore, by combining the electrolyte solution 50 with an optimized formulation and the configuration in which the arrangement structure of each battery element inside the storage container 2 is optimized, it is possible to provide the non-aqueous electrolyte secondary batteries 1 and 100 which are small-sized coin-type, have excellent high output characteristics, and have excellent high capacity characteristics.

### [Examples]

Next, the present invention will be described more specifically by showing Examples and Comparative Examples. The scope of the present invention is not limited by Examples, and the non-aqueous electrolyte secondary battery according to the present invention can be modified appropriately without changing the gist of the present invention.

### <Production and evaluation of non-aqueous electrolyte secondary battery>

### [Experimental Examples 1 to 7]

In Experimental Examples 1 to 7, as shown in FIG. 1, a coin-type non-aqueous electrolyte secondary battery was produced in which the storage container 2 had a structure such that the gasket 40 was interposed between the inner bottom portion 12b and the inner side portion 12c of the positive electrode can 12 and the negative electrode can 22 for insulating and sealing. In Experimental Examples 1 to 7, an electrolyte solution having the following formulation was prepared to produce the non-aqueous electrolyte secondary battery.

In the present experimental example, a coin-type (920 type) non-aqueous electrolyte secondary battery (lithium secondary battery) having an outer shape of ϕ 9.5 mm and a thickness of 2.0 mm as shown in the cross-sectional view of FIG. 1 was produced.

### (Adjustment of electrolyte solution)

An electrolyte solution was prepared by adjusting an organic solvent at a blending ratio (% by volume) described below and dissolving a supporting salt in the organic solvent.

First, as the organic solvent, propylene carbonate (PC), ethylene carbonate (EC), and dimethoxyethane (DME) were mixed at a volume ratio of {PC:EC:DME} = {1:1:2} to adjust a mixed solvent.

Next, lithium bis(fluorosulfonyl)imide (LiFSI) as the supporting salt was dissolved in the obtained mixed solvent in a range of 1 to 7 M (1 to 7 mol/L) by changing the concentration in steps of 1 M, thereby preparing 7 kinds of electrolyte solutions (Experimental Examples 1 to 7) having different concentrations of the supporting salt.

### (Production of battery)

As the positive electrode 10, first, a commercially available lithium manganese oxide (Li_{1.14}Co_{0.06}Mm_{1.80}O₄) as a positive electrode active material, graphite as a conductive aid, and polyacrylic acid as a binding agent were mixed with each other at a ratio of lithium manganese oxide: graphite: polyacrylic acid = 95:4:1 (mass ratio) to obtain a positive electrode mixture.

Next, 56 mg of the obtained positive electrode mixture was pressurized with a pressurizing force of 2 ton/cm² to form a disc-shaped pellet having a diameter (ϕ) of 5.8 mm and a thickness (t) of 0.8 mm.

Next, the obtained pellet (positive electrode 10) was adhered to an inner surface of the positive electrode can 12 made of stainless steel (SUS329J4L: t = 0.2 mm) using a conductive resin adhesive containing carbon, and integrated to obtain a positive electrode unit. Thereafter, the positive electrode unit was dried by heating under reduced pressure at 120°C for 11 hours in the air.

A sealing agent was applied to an inner surface of the opening portion 12a of the positive electrode can 12 in the positive electrode unit.

Next, as the negative electrode 20, first, SiO powder in which the entire surface was coated with carbon (C) was prepared and used as a negative electrode active material. The negative electrode active material was mixed with graphite as a conductive agent and polyacrylic acid as a binding agent at a ratio of 75:20:5 (mass ratio) to obtain a negative electrode mixture.

Next, 11.5 mg of the obtained negative electrode mixture was pressure-molded with a pressurizing force of 2 ton/cm² to form a disc-shaped pellet having a diameter (ϕ) of 6.3 mm and a thickness (t) of 0.2 mm.

Next, the obtained pellet (negative electrode 20) was adhered to the inner top portion 22b of the negative electrode can 22 made of stainless steel (Cu-SUS304-Ni clad can: t = 0.2 mm) using a conductive resin adhesive with carbon as a conductive filler, and integrated to obtain a negative electrode unit. Thereafter, the negative electrode unit was dried by heating under reduced pressure at 160°C for 11 hours in a vacuum.

On the pellet-like negative electrode 20, the lithium foil 60 punched in a disc shape having a diameter (ϕ) of 5.8 mm and a thickness (t) of 0.42 mm was pressed to form a lithium-negative electrode laminated electrode.

As described above, in the present experimental example, a non-aqueous electrolyte secondary battery in which the positive electrode current collector 14 and the negative electrode current collector 24 shown in FIG. 1 were not provided was produced, and the positive electrode can 12 also served as the positive electrode current collector and the negative electrode can 22 also served as the negative electrode current collector.

Next, after drying a nonwoven fabric made of glass fiber, the nonwoven fabric was punched into a disc shape having a diameter (ϕ) of 7.4 mm to obtain the separator 30. The separator 30 was placed on the lithium foil 60 pressed on the negative electrode 20, and a polypropylene gasket 40 was placed in the opening portion of the negative electrode can 22.

Next, the positive electrode can 12 and the negative electrode can 22 were filled with 30 µL of the electrolyte solution adjusted by the above-described procedure in total per battery. In this case, for each of the 7 kinds of the electrolyte solutions (Experimental Examples 1 to 7) prepared by changing the concentrations of the supporting salt, each of the above-described members constituting the non-aqueous electrolyte secondary battery was prepared, and the positive electrode can 12 and the negative electrode can 22 were filled with the electrolyte solution.

Next, the negative electrode unit was crimped to the positive electrode unit so that the separator 30 was in contact with the positive electrode 10. After sealing the positive electrode can 12 and the negative electrode can 22 by fitting the opening portion of the positive electrode can 12, the battery was left to stand at 25°C for 7 days, and non-aqueous electrolyte secondary batteries of Experimental Examples 1 to 7 having different concentrations of the supporting salt (LiFSI) contained in the electrolyte solution were obtained.

As described above, the non-aqueous electrolyte secondary battery of each experimental example differed in the amount of the supporting salt contained in the electrolyte solution, and the number of samples (the number of productions) n was set to n = 3.

### (Evaluation method)

With regard to the non-aqueous electrolyte secondary batteries of Experimental Examples 1 to 7 with each concentration of the supporting salt, each discharge capacity was measured at a discharge current of 1.0 mA and 7.0 mA. In this case, a final discharge voltage was set to 1.0 V, and the results are shown in the graphs of each of FIG. 3A (discharge current: 1.0 mA) and FIG. 3B (discharge current: 7.0 mA).

In addition, with regard to the non-aqueous electrolyte secondary batteries of Experimental Examples 1 to 7, each discharge capacity was measured in a case where the discharge current was changed in a range of 1 mA to 8 mA at intervals of 1 mA. In this case, a final discharge voltage was set to 1.0 V, and the results are collectively shown in the graph of FIG. 4. In the graph of FIG. 4, the average value of n = 3 in each experimental example is shown as the discharge capacity.

In addition, with regard to the non-aqueous electrolyte secondary batteries of Experimental Examples 1 to 7, with respect to the effect of increasing the capacity in a case where the concentrations of the supporting salt contained in the electrolyte solution were changed, the effect was expressed as a relative value (%) in a case where the discharge capacity at a concentration of the supporting salt of 1 M (1 mol/L) was set to "1", and the results obtained in a case where a final discharge voltage was 2.0 V and 1.0 V are shown in the graphs of each of FIG. 5A (final discharge voltage: 2.0 V) and FIG. 5B (final discharge voltage: 1.0 V). In the graphs of FIG. 5A and FIG. 5B, the average value of n = 3 in each experimental example is shown as the capacity increase effect.

### [Experimental Examples 11 to 17]

In Experimental Examples 11 to 17, as shown in FIG. 2, a coin-type non-aqueous electrolyte secondary battery was produced in which the storage container 102 had a structure such that the positive electrode 110 was disposed to cover the entire inner bottom portion 112b of the positive electrode can 112 and the gasket 140 was interposed between the inner side portion 112c of the positive electrode can 112 and the positive electrode 110 and the negative electrode can 122 for insulating and sealing. In addition, in Experimental Examples 11 to 17, an electrolyte solution having the following formulation was prepared to produce the non-aqueous electrolyte secondary battery.

In the present experimental example, a coin-type (920 type) non-aqueous electrolyte secondary battery (lithium secondary battery) having an outer shape of ϕ 9.5 mm and a thickness of 2.0 mm as shown in the cross-sectional view of FIG. 2 was produced.

In Experimental Examples 11 to 17, electrolyte solutions having the same formulations as those prepared in Experimental Examples 1 to 7 were used.

In addition, as the positive electrode 110, the same commercially available lithium manganese oxide (Li_{1.14}Co_{0.06}Mn_{1.80}O₄) as the positive electrode active material used in Experimental Examples 1 to 7, graphite as a conductive aid, and polyacrylic acid as a binding agent were mixed with each other at the same ratio to obtain a positive electrode mixture.

Next, 115 mg of the obtained positive electrode mixture was pressurized with a pressurizing force of 2 ton/cm² to form a disc-shaped pellet having a diameter (ϕ) of 8.9 mm and a thickness (t) of 0.67 mm.

Next, the obtained pellet (positive electrode 110) was adhered to the entire surface of the inner bottom portion 112b of the positive electrode can 112 made of stainless steel (SUS329J4L: t = 0.2 mm) using a conductive resin adhesive containing carbon, and integrated to obtain a positive electrode unit. Thereafter, the positive electrode unit was dried by heating under reduced pressure at 120°C for 11 hours in the air.

A sealing agent was applied to an inner surface of the opening portion 112a of the positive electrode can 112 in the positive electrode unit.

Next, as the negative electrode 120, the same SiO powder in which the entire surface was coated with carbon, as the negative electrode active material used in Experimental Examples 1 to 7, was prepared, and the negative electrode active material was mixed with graphite as a conductive agent and polyacrylic acid as a binding agent at the same ratio to obtain a negative electrode mixture.

Next, 15.1 mg of the obtained negative electrode mixture was pressure-molded with a pressurizing force of 2 ton/cm² to form a disc-shaped pellet having a diameter (ϕ) of 6.7 mm and a thickness (t) of 0.25 mm.

Next, the same as in Experimental Examples 1 to 7, the obtained pellet (negative electrode 120) was adhered to the inner top portion 122b of the negative electrode can 122 made of stainless steel (Cu-SUS304-Ni clad can: t = 0.2 mm) using a conductive resin adhesive with carbon as a conductive filler, and integrated to obtain a negative electrode unit. Thereafter, the negative electrode unit was dried by heating under reduced pressure at 160°C for 11 hours in a vacuum.

On the pellet-like negative electrode 120, a lithium foil 160 punched in a disc shape having a diameter (ϕ) of 6.1 mm and a thickness (t) of 0.38 mm was pressed to form a lithium-negative electrode laminated electrode.

Next, the same as in Experimental Examples 1 to 7, after drying a nonwoven fabric made of glass fiber, the nonwoven fabric was punched into a disc shape having a diameter (ϕ) of 7.4 mm to obtain the separator 130, the separator 130 was placed on the lithium foil 160 pressed on the negative electrode 120, and the polypropylene gasket 140 was placed in the opening portion of the negative electrode can 122.

Next, the positive electrode can 112 and the negative electrode can 122 were filled with 30 µL of the electrolyte solution adjusted by the above-described procedure in total per battery. In this case, for each of the 7 kinds of the electrolyte solutions (Experimental Examples 11 to 17; the same concentrations as in Experimental Examples 1 to 7) prepared by changing the concentrations of the supporting salt, each of the above-described members constituting the non-aqueous electrolyte secondary battery was prepared, and the positive electrode can 112 and the negative electrode can 122 were filled with the electrolyte solution.

Next, after the positive electrode can 112 and the negative electrode can 122 were sealed by fitting the opening portion of the positive electrode can 112 by crimping the negative electrode unit to the positive electrode unit so that the separator 130 was in contact with the positive electrode 110, the battery was left to stand at 25°C for 7 days, and non-aqueous electrolyte secondary batteries of Experimental Examples 11 to 17 having different concentrations of the supporting salt (LiFSI) contained in the electrolyte solution were obtained.

For the non-aqueous electrolyte secondary batteries of Experimental Examples 11 to 17, the number of samples (the number of productions) n was set to n = 3.

With regard to the obtained non-aqueous electrolyte secondary batteries of Experimental Examples 11 to 17, the same as in Experimental Examples 1 to 7, each discharge capacity was measured at a discharge current of 1.0 mA and 7.0 mA and a final discharge voltage of 1.0 V, and the results are shown in the graphs of each of FIG. 6A (discharge current: 1.0 mA) and FIG. 6B (discharge current: 7.0 mA).

In addition, with regard to the non-aqueous electrolyte secondary batteries of Experimental Examples 11 to 17, the same as in Experimental Examples 1 to 7, the effects of increasing the capacity in a case where the concentrations of the supporting salt contained in the electrolyte solution were changed are shown in the graphs of each of FIG. 7A and FIG. 7B. Even in Experimental Examples 11 to 17, the same as in Experimental Examples 1 to 7, the capacity increase effect was expressed as a relative value (%) in a case where the discharge capacity at a concentration of the supporting salt of 1 M (1 mol/L) was set to "1", and the results obtained in a case where a final discharge voltage was 2.0 V and 1.0 V are shown in the graphs of each of FIG. 7A (final discharge voltage: 1.0 V) and FIG. 7B (final discharge voltage: 2.0 V). In addition, in the graphs of FIG. 7A and FIG. 7B, the average value of n = 3 in each experimental example is shown as the capacity increase effect.

### [Experimental Examples 21 to 27]

Even in Experimental Examples 21 to 27, as shown in FIG. 2, a coin-type non-aqueous electrolyte secondary battery was produced in which the storage container 102 had a structure such that the positive electrode 110 was disposed to cover the entire inner bottom portion 112b of the positive electrode can 112 and the gasket 140 was interposed between the inner side portion 112c of the positive electrode can 112 and the positive electrode 110 and the negative electrode can 122 for insulating and sealing. In addition, in Experimental Examples 21 to 27, an electrolyte solution having the following formulation was prepared to produce the non-aqueous electrolyte secondary battery.

Even in the present experimental example, a coin-type (920 type) non-aqueous electrolyte secondary battery (lithium secondary battery) having an outer shape of ϕ 9.5 mm and a thickness of 2.0 mm as shown in the cross-sectional view of FIG. 2 was produced.

Even in Experimental Examples 21 to 27, electrolyte solutions having the same formulations as those prepared in Experimental Examples 1 to 7 and Experimental Examples 11 to 17 were used.

In addition, as the positive electrode 110, a positive electrode active material formed of a commercially available lithium manganese oxide (Li₄Mn₅O₁₂), graphite as a conductive aid, and polyacrylic acid as a binding agent were mixed with each other at a ratio of lithium manganese oxide: graphite: polyacrylic acid = 90:8:2 (mass ratio) to obtain a positive electrode mixture.

Next, 98.6 mg of the obtained positive electrode mixture was pressurized with a pressurizing force of 2 ton/cm² to form a disc-shaped pellet having a diameter (ϕ) of 8.9 mm and a thickness (t) of 0.67 mm.

Next, the same as in Experimental Examples 11 to 17, the obtained pellet (positive electrode 110) was adhered to the entire surface of the inner bottom portion 112b of the positive electrode can 112 made of stainless steel (SUS329J4L: t = 0.2 mm) using a conductive resin adhesive containing carbon, and integrated to obtain a positive electrode unit. Thereafter, the positive electrode unit was dried by heating under reduced pressure at 120°C for 11 hours in the air.

A sealing agent was applied to an inner surface of the opening portion 112a of the positive electrode can 112 in the positive electrode unit.

Next, as the negative electrode 120, a negative electrode active material formed of SiO powder which was not coated with carbon was prepared, and the negative electrode active material was mixed with graphite as a conductive agent and polyacrylic acid as a binding agent at a ratio of 54:44:2 (mass ratio) to obtain a negative electrode mixture.

Next, 15.1 mg of the obtained negative electrode mixture was pressure-molded with a pressurizing force of 2 ton/cm² to form a disc-shaped pellet having a diameter (ϕ) of 6.7 mm and a thickness (t) of 0.25 mm.

Next, the same as in Experimental Examples 11 to 17, the obtained pellet (negative electrode 120) was adhered to the inner top portion 122b of the negative electrode can 122 made of stainless steel (Cu-SUS304-Ni clad can: t = 0.2 mm) using a conductive resin adhesive with carbon as a conductive filler, and integrated to obtain a negative electrode unit. Thereafter, the negative electrode unit was dried by heating under reduced pressure at 160°C for 11 hours in a vacuum.

On the pellet-like negative electrode 120, the lithium foil 160 punched in a disc shape having a diameter (ϕ) of 6.1 mm and a thickness (t) of 0.38 mm was pressed to form a lithium-negative electrode laminated electrode.

Next, the same as in Experimental Examples 11 to 17, after drying a nonwoven fabric made of glass fiber, the nonwoven fabric was punched into a disc shape having a diameter (ϕ) of 7.4 mm to obtain the separator 130, the separator 130 was placed on the lithium foil 160 pressed on the negative electrode 120, and the polypropylene gasket 140 was placed in the opening portion of the negative electrode can 122.

Next, the positive electrode can 112 and the negative electrode can 122 were filled with 30 µL of the electrolyte solution adjusted by the above-described procedure in total per battery. In this case, for each of the 7 kinds of the electrolyte solutions (Experimental Examples 21 to 27; the same concentrations as in Experimental Examples 1 to 7 and Experimental Examples 11 to 17) prepared by changing the concentrations of the supporting salt, each of the above-described members constituting the non-aqueous electrolyte secondary battery was prepared, and the positive electrode can 112 and the negative electrode can 122 were filled with the electrolyte solution.

Next, the same as in Experimental Examples 11 to 17, after the positive electrode can 112 and the negative electrode can 122 were sealed by fitting the opening portion of the positive electrode can 112 by crimping the negative electrode unit to the positive electrode unit so that the separator 130 was in contact with the positive electrode 110, the battery was left to stand at 25°C for 7 days, and non-aqueous electrolyte secondary batteries of Experimental Examples 21 to 27 having different concentrations of the supporting salt (LiFSI) contained in the electrolyte solution were obtained.

For the non-aqueous electrolyte secondary batteries of Experimental Examples 21 to 27, the number of samples (the number of productions) n was also set to n = 3.

With regard to the obtained non-aqueous electrolyte secondary batteries of Experimental Examples 21 to 27, the same as in Experimental Examples 1 to 7 and Experimental Examples 11 to 17, each discharge capacity was measured at a discharge current of 1.0 mA and 7.0 mA and a final discharge voltage of 1.0 V, and the results are shown in the graphs of each of FIG. 8A (discharge current: 1.0 mA) and FIG. 8B (discharge current: 7.0 mA).

In addition, with regard to the non-aqueous electrolyte secondary batteries of Experimental Examples 21 to 27, the same as in Experimental Examples 1 to 7 and Experimental Examples 11 to 17, the effects of increasing the capacity in a case where the concentrations of the supporting salt contained in the electrolyte solution were changed are shown in the graphs of each of FIG. 9A and FIG. 9B. Even in Experimental Examples 21 to 27, the same as in Experimental Examples 1 to 7 and Experimental Examples 11 to 17, the capacity increase effect was expressed as a relative value (%) in a case where the discharge capacity at a concentration of the supporting salt of 1 M (1 mol/L) was set to "1", and the results obtained in a case where a final discharge voltage was 1.0 V and 2.0 V are shown in the graphs of each of FIG. 9A (final discharge voltage: 1.0 V) and FIG. 9B (final discharge voltage: 2.0 V). In addition, even in the graphs of FIG. 9A and FIG. 9B, the average value of n = 3 in each experimental example is shown as the capacity increase effect.

### [Experimental Examples 31 to 37]

In Experimental Examples 31 to 37, as shown in FIG. 1, a coin-type non-aqueous electrolyte secondary battery having the same specification as in Experimental Examples 1 to 7 was produced in which the storage container 2 had a structure such that the gasket 40 was interposed between the inner bottom portion 12b and the inner side portion 12c of the positive electrode can 12 and the negative electrode can 22 for insulating and sealing. That is, even in Experimental Examples 31 to 37, electrolyte solutions were prepared with the same formulation as in Examples 1 to 7, and a coin-type (920 type) non-aqueous electrolyte secondary battery (lithium secondary battery) having an outer shape of ϕ 9.5 mm and a thickness of 2.0 mm as shown in the cross-sectional view of FIG. 1 was produced.

In Experimental Examples 31 to 37, a high-temperature and high-humidity storage test (HHTS) was performed using a commercially available high-humidity constant temperature tester to confirm transition of the internal resistance during the high-temperature and high-humidity storage period, and the results are shown in the graph of FIG. 10A. In addition, in Experimental Examples 31 to 37, a rate of increase in the initial value of the internal resistance during the same high-temperature and high-humidity storage period was confirmed, and the results are shown in the graph of FIG. 10B.

The conditions for the above-described high-temperature and high-humidity storage test were as follows: the non-aqueous electrolyte secondary batteries in Experimental Examples 31 to 37 were short-circuited through a resistor of 18 kΩ to be in an overdischarged state, and in this state, the test was conducted at a temperature of 60°C and a humidity of 90 %RH for periods of 7 days, 14 days, 21 days, 28 days, and 40 days.

The above-described internal resistance was measured by an AC method at a frequency of 1 kHz.

In addition, in Experimental Examples 31 to 37, the same high-temperature and high-humidity storage test (HHTS) was performed under the following conditions using a commercially available high-humidity constant temperature tester to confirm transition of the discharge capacity and capacity retention rate with respect to initial values during the high-temperature and high-humidity storage period, and the results are shown in the graphs of FIG. 11A and FIG. 11B. In this case, the test was conducted under the same high-temperature and high-humidity storage conditions as described above, except that the period conditions were set to 28 days and 40 days.

In the above-described measurement of the discharge capacity, first, the battery was charged under the conditions of a room temperature (25°C) environment, a voltage of 3.1 V, a current of 0.3 mA, and a charging time of 120 hr, and the initial capacity was obtained by discharging under the conditions of a temperature of 25°C, a current or 50 µA, and a first voltage of 2 V.

After the high-temperature and high-humidity storage test, a value obtained by charging and discharging the non-aqueous electrolyte secondary battery under the same conditions as the initial capacity was defined as a discharge capacity after the test, and the capacity retention rate with respect to the initial capacity was obtained.

### <Evaluation results>

As shown in the graphs of FIG. 3A and FIG. 3B, in Experimental Examples 1 to 7 in which, using the non-aqueous electrolyte secondary battery having a structure in which the gasket 40 was interposed between the inner bottom portion 12b and the inner side portion 12c of the positive electrode can 12 and the negative electrode can 22 for insulating and sealing (see FIG. 1), the experiments were conducted by changing the content of LiFSI contained in the electrolyte solution, it was confirmed that, in a case where the content of LiFSI was in a range of 2 to 5 mol/L (Experimental Examples 2 to 5), a large discharge capacity was obtained. In particular, it was confirmed that, in a case where the content of LiFSI contained in the electrolyte solution was 3 to 4 mol/L (Experimental Examples 3 and 4), a very large discharge capacity was obtained. This is also clear from the graph in FIG. 4 showing the relationship between the discharge current and the capacity.

In addition, as shown in the graphs of FIG. 5A and FIG. 5B, in Experimental Examples 1 to 7, in the case where the content of LiFSI was in a range of 2 to 5 mol/L (Experimental Examples 2 to 5), a large capacity increase effect was observed, in particular, in the final discharge voltage of 1.0 V, it was confirmed that, in the case where the content of LiFSI contained in the electrolyte solution was 3 to 4 mol/L (Experimental Examples 3 and 4), a larger capacity increase effect was obtained.

In addition, even in Experimental Examples 11 to 17 in which, using the non-aqueous electrolyte secondary battery having a structure in which the positive electrode 110 was disposed to cover the entire inner bottom portion 112b of the positive electrode can 112 and the gasket 140 was interposed between the inner side portion 112c of the positive electrode can 112 and the positive electrode 120, and the negative electrode can 122 for insulating and sealing (see FIG. 2), the experiments were conducted by changing the content of LiFSI contained in the electrolyte solution, as shown in the graphs of FIG. 6A and FIG. 6B, it was confirmed that, in a case where the content of LiFSI was in a range of 2 to 5 mol/L (Experimental Examples 12 to 15), a large discharge capacity was obtained. In addition, in Experimental Examples 11 to 17, in particular, it was confirmed that, in a case where the content of LiFSI contained in the electrolyte solution was 2 to 3 mol/L (Experimental Examples 12 and 13), a very large discharge capacity was obtained.

In addition, as shown in the graphs of FIG. 7A and FIG. 7B, even in Experimental Examples 11 to 17, in the case where the content of LiFSI was in a range of 2 to 5 mol/L (Experimental Examples 12 to 15), a large capacity increase effect was observed, in particular, it was confirmed that, in the case where the content of LiFSI contained in the electrolyte solution was 2 to 3 mol/L (Experimental Examples 12 and 13), a larger capacity increase effect was obtained stably.

In addition, as shown in the graphs of FIG. 7A and FIG. 7B, even in Experimental Examples 21 to 27 having the same structure as the non-aqueous electrolyte secondary batteries (see FIG. 2) of Experimental Examples 11 to 17, in which the formulation of the positive electrode active material used for the positive electrode 110, the particle structure of the negative electrode active material used for the negative electrode 120, and the formulation of the negative electrode mixture were changed, it was confirmed that, in a case where the content of LiFSI was in a range of 2 to 5 mol/L (Experimental Examples 22 to 25), a large discharge capacity was obtained.

In addition, even in Experimental Examples 21 to 27, in particular, it was confirmed that, in a case where the content of LiFSI contained in the electrolyte solution was 2 to 3 mol/L (Experimental Examples 22 and 23), a very large discharge capacity was obtained.

In addition, as shown in the graphs of FIG. 9A and FIG. 9B, even in Experimental Examples 21 to 27, in the case where the content of LiFSI was in a range of 2 to 5 mol/L (Experimental Examples 22 to 25), a large capacity increase effect was observed, in particular, it was confirmed that, in the case where the content of LiFSI contained in the electrolyte solution was 2 to 3 mol/L (Experimental Examples 22 and 23), a larger capacity increase effect was obtained.

In addition, as shown in the graph of FIG. 10A, in Experimental Examples 31 to 37 in which, using the non-aqueous electrolyte secondary battery having a structure in which the gasket 40 was interposed between the inner bottom portion 12b and the inner side portion 12c of the positive electrode can 12 and the negative electrode can 22 for insulating and sealing (see FIG. 1), the experiments were conducted by changing the content of LiFSI contained in the electrolyte solution, in particular, it was confirmed that, in a case where the content of LiFSI was in a range of 4 to 7 mol/L (Experimental Examples 34 to 37), the internal resistance was approximately 180 Ω to 315 Ω, which was greatly reduced. From the curve shown in the graph of FIG. 10A, in Experimental Examples 34 to 37, it was clear that the increase in internal resistance was suppressed regardless of the storage period of 7 days, 14 days, 21 days, 28 days, or 40 days.

In addition, as shown in the graph of FIG. 10B, in Experimental Examples 31 to 37, in particular, in Experimental Examples 34 to 37 in which the content of LiFSI was in a range of 4 to 7 mol/L, it was confirmed that the rate of increase in internal resistance was greatly suppressed. In these Experimental Examples 34 to 37, it was clear that the rate of increase in internal resistance was greatly suppressed regardless of the storage period of 7 days, 14 days, 21 days, 28 days, or 40 days.

In addition, in Experimental Examples 31 to 37, in particular, in Experimental Examples 34 to 37 in which the content of LiFSl was in a range of 4 to 7 mol/L, it was confirmed that the decrease in discharge capacity after storage in a high-temperature and high-humidity environment and overdischarge was suppressed.

More specifically, as shown in the graphs of FIG. 11A and FIG. 11B, it was found that, regardless of whether the storage period was 28 days or 40 days, a sufficient discharge capacity (capacity after storage) compared to the initial capacity was obtained. In addition, in Experimental Examples 34 to 37, it was found that the capacity retention rate after storage in a high-temperature and high-humidity environment and overdischarge was 68% to 93% in a case where the storage period was 28 days, and was 45% to 85% in a case where the storage period was 40 days, which indicates that the capacity retention rate is higher than that of the non-aqueous electrolyte secondary batteries in the related art.

As described above, in a case where the concentration of LiFSI having excellent conductivity was within the above-described range, the detailed mechanism of the effect of improving electrical characteristics (overdischarge characteristics) of the non-aqueous electrolyte secondary battery after being stored under the conditions of high temperature, high humidity, and overdischarge is not clear. On the other hand, from the results of the above-described experimental examples, it was confirmed that, in a case where the concentration of LiFSI was within the above-described range, deterioration of the non-aqueous electrolyte secondary battery could be prevented even in a case where overdischarge occurs.

From the results of the above-described examples (Experimental Examples 1 to 7, 11 to 17, and 21 to 27), by using the electrolyte solution having a formulation specified in the present invention and combining the configuration in which the arrangement structure of each battery element inside is optimized, it is clear that a non-aqueous electrolyte secondary battery can be obtained that can maintain a sufficient discharge capacity even at a mA-level discharge, and can provide high output characteristics and high capacity characteristics with a small size.

In addition, from the results of the above-described examples (Experimental Examples 31 to 37), by using, as the supporting salt used in the electrolyte solution, LiFSI having excellent conductivity at the molar ratio within the above-described range and combining the configuration in which the arrangement structure of each battery element inside is optimized, the electrical characteristics (overdischarge characteristics) of the non-aqueous electrolyte secondary battery after being stored under conditions of high temperature and high humidity, and overdischarge are further improved. Therefore, it is clear that it is possible to more effectively prevent the deterioration of the non-aqueous electrolyte secondary battery even in a case where overdischarge occurs.

### [Industrial Applicability]

With the non-aqueous electrolyte secondary battery according to the embodiment of the present invention, a large current can be supplied over a wide temperature range, a sufficient discharge capacity can be maintained even at a mA-level discharge, and it is possible to obtain high output characteristics and high capacity characteristics in spite of its small size. Therefore, by applying the present invention to a non-aqueous electrolyte secondary battery used in the field of various electronic devices, for example, by using the non-aqueous electrolyte secondary battery as a backup power source or a main power source, it can contribute to miniaturization and performance improvement of various electronic devices.

### [Reference Signs List]

1, 100: Non-aqueous electrolyte secondary battery
2, 102: Storage container
10, 110: Positive electrode
12, 112: Positive electrode can
12a, 112a: Opening portion
12b, 112b: Inner bottom portion
12c, 112c: inner side portion
14, 114: Positive electrode current collector
20, 120: Negative electrode
22, 122: Negative electrode can
22a: Tip portion
22b, 122b: Inner top portion
24: Negative electrode current collector
30: Separator
40: Gasket
41: Annular groove
50: Electrolyte solution
60: Lithium foil

## Claims

1. A non-aqueous electrolyte secondary battery, comprising:
a positive electrode containing a positive electrode active material;
a negative electrode containing a negative electrode active material;
a separator disposed between the positive electrode and the negative electrode;
an electrolyte solution containing an organic solvent and a supporting salt; and
a storage container in which the positive electrode, the negative electrode, the separator, and the electrolyte solution are arranged in an internal storage space,
wherein at least one of the positive electrode or the negative electrode is in the form of a pellet containing an active material, a conductive aid, and a binder,
the separator is formed of a glass fiber non-woven fabric, and
the electrolyte solution contains, as the organic solvent, a mixed solution consisting of propylene carbonate (PC), ethylene carbonate (EC), and dimethoxyethane (DME) at a volume ratio in a range of {PC:EC:DME} = {0.5 to 1.5:0.5 to 1.5:1 to 3}, and contains, as the supporting salt, 2 to 7 (mol/L) of lithium bis(fluorosulfonyl)imide (LiFSI).

2. The non-aqueous electrolyte secondary battery according to Claim 1,
wherein the electrolyte solution contains 4 to 7 (mol/L) of the lithium bis(fluorosulfonyl)imide (LiFSI) as the supporting salt.

3. The non-aqueous electrolyte secondary battery according to Claim 1 or 2,
wherein the storage container includes
a bottomed cylindrical positive electrode can, and
a negative electrode can which is fixed to an opening portion of the positive electrode can with an interposed gasket to form a storage space with the positive electrode can, and
the storage container is a coin-type container in which the storage space is sealed by crimping the opening portion of the positive electrode can toward a negative electrode can side.

4. The non-aqueous electrolyte secondary battery according to Claim 3,
wherein the storage container has a structure in which the gasket is interposed between an inner bottom portion and an inner side portion of the positive electrode can and the negative electrode can for insulating and sealing.

5. The non-aqueous electrolyte secondary battery according to Claim 4,
wherein the electrolyte solution contains 3 to 4 (mol/L) of the lithium bis(fluorosulfonyl)imide (LiFSI) as the supporting salt.

6. The non-aqueous electrolyte secondary battery according to Claim 2,
wherein the storage container has a structure in which the positive electrode is disposed to cover an entire inner bottom portion of the positive electrode can and the gasket is interposed between an inner side portion of the positive electrode can and the positive electrode, and the negative electrode can for insulating and sealing.

7. The non-aqueous electrolyte secondary battery according to Claim 6,
wherein the electrolyte solution contains 2 to 3 (mol/L) of the lithium bis(fluorosulfonyl)imide (LiFSI) as the supporting salt.

8. The non-aqueous electrolyte secondary battery according to any one of Claims 1 to 7,
wherein the positive electrode contains, as the positive electrode active material, at least a lithium manganese oxide composed of Li₁₊ₓCo_{y}Mn_{2-x-y}O₄ (0 < x ≤ 0.33 and 0 < y ≤ 0.2).

9. The non-aqueous electrolyte secondary battery according to any one of Claims 1 to 8,
wherein the negative electrode contains, as the negative electrode active material, SiOx (0 < X < 2) having at least a part of a surface coated with a carbon.
